# EUROPÄISCHE PATENTSCHRIFT

(11) **EP 2 595 104 B1**
(45) Veröffentlichungstag und Bekanntmachung des Hinweises auf die Patenterteilung: **11.07.2018**
(21) Anmeldenummer: 11189632.0
(22) Anmeldetag: 17.11.2011
(51) Int. Cl.: G06F 21/00, G06Q 20/32, G06Q 20/38, G06Q 20/40, G06F 21/36

(54) **Elektronisches Transaktionsverfahren**
Electronic transaction method
Procédé de transaction électronique

(43) Veröffentlichungstag der Anmeldung: 22.05.2013
(73) Patentinhaber: Deutsche Post AG, 53113 Bonn (DE)
(72) Erfinder: Hagemann, Dirk, 51503 Rösrath (DE); Lampe, Jochen, 52393 Hürtgenwald (DE)
(74) Vertreter: Jostarndt Patentanwalts-AG

(56) Entgegenhaltungen:
- WO-A1-2009/121437
- WO-A1-2010/001423
- DE-C1- 10 039 569
- MANHART K: "BEZAHLEN PER HANDY", FUNKSCHAU, WEKA FACHZEITSCHRIFTEN VERLAG, POING, DE, Bd. 73, Nr. 15, 7. Juli 2000 (2000-07-07), Seiten 40-42, XP001101071, ISSN: 0016-2841

## Beschreibung

### Gebiet der Erfindung

Die Erfindung bezieht sich auf ein elektronisches Verfahren zur Freigabe einer Transaktion, ein entsprechendes Transaktionssystem, eine Transaktions-Applikation zur Ausführung des Verfahrens, ein mobiles Terminal mit einer solchen Transaktions-Applikation, und auf ein Bezahlsystem umfassend das Transaktionssystem.

### Hintergrund der Erfindung

Elektronische Verfahren zur Unterstützung von geschäftlichen Transaktionen, insbesondere das Bezahlen von Waren, werden bereits weltweit eingesetzt. Solche elektronischen Verfahren ermöglichen beispielsweise das bargeldlose Bezahlen in einem Geschäft unter Verwendung einer Bezahlkarte wie beispielsweise eine EC-Karte oder eine Kreditkarte. Damit eine solche Zahlung per EC-Karte oder Kreditkarte möglich ist, muss im entsprechenden Geschäft ein elektronischer Kartenleser vorhanden sein, in den die entsprechende Bezahlkarte eingeschoben wird und der über eine Datenleitung mit einem Bezahlsystem, beispielsweise der Kartengesellschaft, verbunden ist, damit vom Geschäft aus die Bezahlung ausgeführt werden kann. Damit ein solches bargeldloses Bezahlen möglich ist, müssen die betreffenden Geschäfte die notwendige technische Infrastruktur bereitstellen, d.h. eine Datenleitung zumindest zur Kartengesellschaft und ein oder mehrere entsprechende Kartenleser.

WO 2012/001423 A1 offenbart ein Verfahren und System zur Verwaltung von Finanztransaktionen zur Autorisierung einer Zahlung für den Kauf von Waren oder Dienstleistungen. Das Verfahren beziehungsweise System umfasst dabei ein erstes elektronisches Gerät für den Nutzer, das mit einem Bearbeitungsgerät verbunden ist, ein zweites elektronisches Geräts verbunden mit einem zweiten Bearbeitungsgerät, ein Hauptbearbeitungsgerät separate von den ersten und zweiten Bearbeitungsgeräten, wobei das zweite elektronische Gerät ein Startsignal für eine Transaktion zum zweiten Bearbeitungsgerät aussendet, welches eine Aktivierungsnachricht zum Hauptbearbeitungsgerät aussendet, das einen Bezahlcode für diese Transaktion generiert, der dafür konfiguriert ist, die ersten und zweiten elektronischen Geräte zu assoziieren, wobei der Bezahlcode auf diesen Geräten bereitgestellt wird. Der Nutzer sendet der Bezahlcode zum ersten Bearbeitungsgerät mittels des ersten elektronischen Geräts, um das erste Bezahlgerät in Kommunikation mit dem zweiten Bezahlgerät, das in die Transaktion involviert ist, zu versetzen.

DE 100 39 569 C1 offenbart ein Verfahren zur Bezahlung an beliebigen Verkaufs- bzw. Dienstleistungsstellen mit Mobiltelefon mittels einer dem Kunden zugeordneten Transaktionsnummer (TAN). Das Verfahren ist dadurch gekennzeichnet, dass der Kunde am Point-of-Sale (POS) oder Automaten der Verkaufs- bzw. Dienstleistungsstelle einen Zahlungswunsch initiiert, dass die Verkaufs- bzw. Dienstleistungsstelle die zahlungsrelevanten Daten, wie Betrag und Händler-ID, an eine zentrale TAN-Vergabestelle übermittelt, dass von der zentralen TAN-Vergabestelle eine TAN generiert und an die Verkaufs- bzw. Dienstleistungsstelle übermittelt wird, wobei die TAN für eine bestimmte Zeitspanne Gültigkeit besitzt, dass die TAN an der Verkaufs- bzw. Dienstleistungsstelle angezeigt wird, dass der Kunde innerhalb der Gültigkeitsdauer der TAN diese am Mobiltelefon eingibt und an die TAN-Vergabestelle übermittelt, wobei er sich gegenüber der TAN-Vergabestelle identifiziert, dass eine Rückbestätigung der zahlungsrelevanten Daten an den Kunden erfolgt, dass der Kunde den Zahlungsvorgang über das Mobiltelefon bestätigt, wonach von der TAN-Vergabestelle die Zahlungsabwicklung veranlasst wird.

Insbesondere kleine Geschäfte wie Kioske oder räumlich abseits gelegene oder mobile Geschäfte sind oftmals nicht in der Lage, die notwendige technische Infrastruktur für eine solches elektronisches Verfahren bereitzustellen. Aber selbst wenn diese Geschäfte die technische Infrastruktur bereitzustellen. Aber selbst wenn diese Geschäfte die technische Infrastruktur bereitstellen würden, hätten die Geschäfte die Zusatzkosten dafür zu tragen, was gerade für kleine Geschäfte oder Geschäfte mit wenig Umsatz sehr schwierig sein kann.

Es wäre daher ein System oder Verfahren wünschenswert, das gerade für kleine oder mobile Geschäfte geschäftliche Transaktionen bei minimaler technischer Infrastruktur unterstützen kann. Es wäre weiterhin wünschenwert, wenn dieses System oder Verfahren zusätzlich kostengünstig betreibbar wäre.

### Zusammenfassung der Erfindung

Es ist eine Aufgabe der vorliegenden Erfindung, ein einfach zu handhabendes elektronisches Verfahren zur Freigabe einer Transaktion im Rahmen eines Geschäfts zwischen Geschäftspartnern zur Verfügung zu stellen, das weitgehend ohne örtliche Begrenzungen angewendet werden kann, ein Minimum an bereits vorhandener technischer Infrastruktur benötigt und dennoch für alle beteiligten Geschäftspartner sicher ist.

Diese Aufgabe wird gelöst durch ein elektronisches Verfahren zur Freigabe einer Transaktion im Rahmen eines Geschäfts zumindest zwischen einer ersten und einer zweiten Person über ein mobiles Terminal der zweiten Person mit einem Anzeigeelement, das mit einem Transaktionsserver eines Transaktionsystems über eine drahtlose Datenverbindung zu einem Datenaustausch zur Freigabe der Transaktion verbunden ist, umfassend die Schritte
- Installieren einer Transaktions-Applikation auf dem mobilen Terminal, vorzugsweise wird die Transaktions-Applikation durch das Transaktionssystem an das mobile Terminal übermittelt,
- Bereitstellen zumindest erster Nutzerdaten der ersten Person und zweiter Nutzerdaten der zweiten Person im Transaktionssystem zum Zugriff durch den Transaktionsserver,
- Übermitteln einer Mehrzahl an Transaktionscodierungen durch das Transaktionssystem an die erste Person, wobei jede Transaktionscodierung eine Personenidentifikation für die erste Person, einen ersten Transaktionscode, vorzugsweise einen graphischen ersten Transaktionscode, und einen zweiten Transaktionscode, vorzugsweise einen graphischen zweiten Transaktionscode, umfasst, wobei sich jede der übermittelten Transaktionscodierungen eindeutig zumindest durch unterschiedliche erste und/oder zweite Transaktionscodes von den anderen übermittelten Transaktionscodierungen unterscheidet,
- Speichern und Zuordnen der übermittelten Transaktionscodierungen im Transaktionssystem zu den ersten Nutzerdaten der ersten Person,
- Ausführen der Transaktions-Applikation auf dem mobilen Terminal der zweiten Person zum Verbinden des mobilen Terminals mit dem Transaktionsserver und zumindest zur Steuerung der Freigabe der Transaktion zur Abwicklung des Geschäfts mit der ersten Person umfassend die Schritte:
   (a) Auswählen der ersten Person über das mobile Terminal durch die zweite Person, vorzugsweise anhand von Daten, die vom Transaktionsserver an das mobile Terminal übermittelt werden,
   (b) Übermitteln zumindest eines ersten Teils einer ersten Transaktionscodierung vom Transaktionsserver an das mobile Terminal der zweiten Person,
   (c) Ergänzen des übermittelten ersten Teils der ersten Transaktionscodierung mit Hilfe der ersten Person mit einer Ergänzung,
   (d) Übermitteln der Ergänzung an den Transaktionsserver,
- Verknüpfen des vom Transaktionsserver übermittelten ersten Teils der ersten Transaktionscodierung mit der Ergänzung zu einer ergänzten Transaktionscodierung und Vergleichen der ergänzten Transaktionscodierung mit der den Nutzerdaten der ersten Person zugeordneten gespeicherten ersten Transaktionscodierung, und
- Freigabe der Transaktion durch den Transaktionsserver nach festgestellter Gleichheit der ergänzten und gespeicherten ersten Transaktionscodierung für diese Transaktion und Übermitteln einer Freigabebestätigung an das mobile Terminal oder Verweigerung der Freigabe bei festgestellter Ungleichheit und Übermitteln der Verweigerung an das mobile Terminal.

Dadurch wird ein einfach zu handhabendes elektronisches Verfahren zur Freigabe einer Transaktion im Rahmen eines Geschäfts zwischen Geschäftspartnern (erste und zweite Personen) zur Verfügung gestellt, das weitgehend ohne örtliche Begrenzungen (drahtlose Verbindung zwischen Transaktionsserver und mobilem Terminal) angewendet werden kann, ein Minimum an bereits vorhandener technischer Infrastruktur (mobiles Terminal der zweiten Person) benötigt und dennoch für alle beteiligten Geschäftspartner (erste und zweite Personen) sicher ist (Verwendung von Transaktionscodierungen mit anschließendem Vergleich und Freigabe nach Prüfung durch den Transaktionsserver). Der Begriff "mobiles Terminal" umfasst hierbei alle Geräte mit einem Anzeigeelement, die eine drahtlose Datenverbindung mit dem Transaktionsserver unterhalten können und applikations- und E-Mail-fähig sind, wie beispielsweise Smartphones. Die drahtlose Datenverbindung kann beispielseise über ein Mobilfunknetz oder ein WLAN-Netz erfolgen. Das Verfahren ist dabei für eine beliebige Zahl an ersten und zweiten Personen ausführbar.

Eine Transaktions im Sinne der vorliegenden Erfindung ist beispielsweise das Bezahlen eines Kaufpreises im Rahmen eines Geschäfts zwischen der ersten Person und der zweiten Person. Hierbei sind beispielsweise die erste Person der Verkäufer einer Ware und die zweite Person der Käufer dieser Ware. Der Käufer kann mit dem voranstehenden Verfahren beispielsweise die Zahlung des Kaufpreises an den Verkäufer über die Freigabe dieser Transaktion (hier die Zahlung) veranlassen. Hierzu sind beispielsweise die Bankdaten der ersten und zweiten Person Teil der ersten und zweiten Nutzerdaten. Die Bankdaten der zweiten Person wären allerdings nicht erforderlich, falls die zweite Person ein Guthaben in anderer Form im Rahmen der Transaktion nutzen kann, beispielsweise über ein vorheriges Aufladen eines Guthabenkontos bei einem an der Transaktion beteiligten System mit einem für die Transaktion ausreichenden Geldbetrages. Infolge der Freigabe kann die Bezahlung des Kaufpreises an den Verkäufer (erste Person) erfolgen. Die Transaktion, hier beispielsweise die Zahlung, wird authorisiert durch das Verwenden von eindeutigen und charakteristischen Transaktionscodierungen. Über das Auswahlverfahren des Verkäufers (erste Person) gefolgt von der Übermittlung eines ersten Teils der Transaktionscodierung durch das Transaktionssystem an den Käufer (zweite Person) auf dessen mobiles Terminal und der Ergänzung der für diese Transaktion gültigen ersten Transaktionscodierung, die in Gänze nur dem Verkäufer (erste Person) bekannt ist, durch die Hilfe des Verkäufers über das mobile Terminal des Verkäufers mit nachfolgender Prüfung durch das Transaktionssystem wird die Transaktion für beide Seite sicher authorisiert. Ein Vergleich der ersten Transaktionscodierung, die im Transaktionssystem hinterlegt ist mit der ergänzten Transaktionscodierung (übermittelter erster Teil der ersten Transaktionscodierung + Ergänzung zu diesem übermittelten ersten Teil) schließt einen Missbrauch des Datenaustausches aus. Wird beispielsweise im mobilen Terminal eine Ergänzung ausgewählt, die nach Verknüpfung mit dem übermittelten ersten Teil der Transaktionscodierung eine Transaktionscodierung ergibt, die nicht der ersten Transaktionscodierung entspricht, die dem Verkäufer vorliegt, wird anstatt der Bestätigung der Freigabe eine Verweigerung an das mobile Terminal gesendet, so dass der Verkäufer erkennen kann, dass keine Freigabe der Transaktion erfolgt ist und somit beispielsweise bei einer Zahlungsanweisung als Transaktion diese nicht erfolgen wird. So kann der Verkäufer beispielsweise die Herausgabe der Ware an den Käufer ablehnen, bis dieser eine wirksame Zahlung geleistet hat. Zeigt dagegen der Käufer (zweite Person) dem Verkäufer (erste Person) die Bestätigung der Freigabe auf seinem mobilen Terminal, kann die Übergabe der Ware an den Käufer erfolgen. Somit wird das Geschäft durch Verwendung des erfindungsgemäßen elektronischen Verfahrens für beide Seiten sicher ausgeführt. Durch die Verwendung eines einzelnen mobilen Terminals, das alleine für die sichere Ausführung des Verfahrens am Ort des Geschäfts ausreicht, ist die Anwendung des Verfahrens im Prinizip örtlich unbegrenzt, vorausgesetzt es existiert eine drahltlose Verbindung zwischen dem mobilen Terminal und dem Transaktionsserver. Diese drahtlose Verbindung wird weitgehend an Land und ggf. auch in Bereichen auf See und in der Luft angeboten. Damit die Transaktion freigegeben werden kann, müssen in dem Transaktionssystem Nutzerdaten zu allen teilnehmenden Nutzern, also zumindest erste und zweite Nutzerdaten zu einer ersten und einer zweiten Person, gespeichert sein. Aufgrund dieser Daten werden die Transaktionscodierungen an die erste Person übermittelt, drahtlose Datenverbindungen zum Übermitteln von Daten wie Personenidentifikationen und erste und zweite Transaktionscodes hergestellt und eine Auswahl an ersten Personen über das mobile Terminal ermöglicht. Diese Nutzerdaten werden beispielsweise innerhalb des Transaktionssystems in einer Nutzerdatenbank gespeichert, die mit dem Transaktionsserver verbunden ist und auf die der Transaktionsserver zum Ausführen der Verfahrensschritte zugreifen kann. Die Nutzerdaten von den Nutzern des Transaktionssystems, also den ersten und zweiten Personen, können in das Transaktionssystem auf unterschiedliche Art und Weise eingepflegt werden. In einer Ausführungsform umfasst das Verfahren den weiteren Schritt eines Registrierens zumindest der ersten und zweiten Personen beim Transaktionssystem zur Erstellung von ersten und zweiten Nutzerdaten. Hierbei ist die Anzahl an ersten und zweiten Personen nicht beschränkt. Die Ausdrücke "erste Person" und "zweite Person" bezeichnen im Sinne der Erfindung nur die Rollenverteilung bei der Ausführung der Verfahrensschritte und stellen keine zahlenmäßige Beschränkung der Anzahl der Nutzer dar. Hierbei können beispielsweise die ersten und zweiten Nutzerdaten durch das Einlesen von Nutzerdatenbögen oder durch das Eingeben von Nutzerdaten anhand von Datenangaben durch die Nutzer (erste und zweite Personen) bei einer Anmeldung der Nutzer in das Transaktionssystem eingepflegt werden.

In einer bevorzugten Ausführungsform wird die Registrierung zumindest der ersten Person über eine Webseite des Transaktionssystems unter Angabe von Daten zumindest durch die erste Person durchgeführt. Beispielsweise aktiviert eine erste Person dazu ein internetfähiges Endgerät wie zum Beispiel ein Laptop, einen PC, ein Notebook oder ein Smartphone und öffnet in einem Browser die Zieladresse der Webseite des Transaktionssystems, wodurch durch Anklicken eines entsprechenden Feldes der Registrierungsprozess für das Transaktionssystem gestartet wird. Der Fachmann ist im Rahmen der vorliegenden Erfindung in der Lage, einen geeigneten Registrierungsprozess für das Transaktionssstem auf einer Webseite zur Verfügung zu stellen. Das Transaktionsystem kann beispielsweise als Netzwerk mit einem oder mehreren Transaktionsservern mit Internetverbindung oder zusätzlich ein oder mehrere Computer zur Bereitstellung der Webseite (in einem Webportal) umfassen, die mit dem oder den Transaktionsserver(n) und ggf. den weiteren Komponenten des Transaktionssyystem verbunden sind. In einem Client-Server-Netzwerk stellen die Transaktionsserver die Server (Backend) dar, während die Computer, über die die ersten und/oder zweiten Personen die Webseite des Transaktionssystems bedienen, die Clients (Frontend) bilden. Wenn im Rahmen dieser Erfindung der Begriff "Transaktionsserver" verwendet wird, schließt dies immer die Möglichkeit der Verwendung von mehreren Transaktionsservern mit ein. Beispielsweise kann ein dreistufiger Registrierungsprozess durchlaufen werden, wobei in einem ersten Schritt persönliche Daten für die erste Person wie beispielsweise persönlicher Name und/oder Name einer Firma, die dazugehörige Adresse, gegebenenfalls Zusatzdaten wie Ansprechpartner in der Firma, Branche der ersten Person (z.B. Blumenladen, Bäckerei, Zeitungskiosk etc.), eine Markierung der Position der ersten Person / Firma auf einer virtuellen Landkarte (z.B. über eine in der Webseite eingebundene Google Maps-Applikation), eingegeben und zum Abschluss der Eingabe bestätigt wird. Bei der Eingabe der Branche werden der ersten Person in einer Ausführungsform durch die Webseite graphische Symbole angeboten, die die erste Person zur Kennzeichnung ihrer Branche auswählen kann. Das ausgewählte Symbol kann in dieser Ausführungsform zur Generierung einer Personenidentifikation oder als die Personenidentifikation für die erste Person für die später zu erstellenden Transaktionscodierungen beispielsweise in einem Erzeugungsmittel zur Erzeugung von Transaktionscodierungen oder in einem Speicher, auf den das Erzeugungsmittel Zugriff hat, gespeichert und verwendet werden. In dieser Ausführungsform ist die Personenidentifikation für die erste Person eine graphische Personenidentifikation. Die Personenidentifikationen der ersten Personen können alternativ auch in den ersten Nutzerdaten in einer Nutzerdatenbank gespeichert werden, auf die das Erzeugungsmittel zur Erzeugung der Transaktionscodierungen zurückgreift. In einer weiteren Ausführungsform kann die erste Person auch ein eigenes graphisches Symbol (z.B. ein Firmenlogo) über die Webseite in das Transaktionssystem als gewünschte Personenidentifikationen hochladen. Die Abspeicherung und der Zugriff auf die Personenidentifikation können dann wie voranstehend beschrieben ausgestaltet sein. Jede erste Person besitzt dabei eine einzigartige Personenidentifikation, die sich von jeder anderen Personenidentifikation anderer erster Personen unterscheidet.

Als zweiter Schritt der Registrierung können transaktionsrelevante Daten von der ersten Person über die Webseite in das Transaktionssystem eingegeben werden. Beispielsweise werden für eine Bezahlung eines Kaufpreises als die Transaktion die Kontodaten wie Name des Kontoinhabers, Name der Bank, wo das Konto unterhalten wird, die Kontonummer und die Bankleitzahl eingegeben. Zum Abschluss des zweiten Schritts werden die eingegebenen Daten von der ersten Person mittels Anklicken eines entsprechenden Feldes auf der Webseite bestätigt und an die Datenbanken, Speicherplätze und/oder den Transaktionsserver übermittelt. Beispielsweise findet bei der Eingabe der transaktionsrelevanten Daten eine Plausibilitätsprüfung statt, um zu verhindern, dass die später freigegebene Transaktion aufgrund von fehlerhaften Nutzerdaten nicht durchgeführt werden kann.

Als dritter Schritt kann ein Benutzername mit einer entsprechenden Zugriffsberechtigung (Account) vergeben werden. Der Benutzername und die Zugriffsberechtigung (z.B. Passwort) werden in den Nutzerdaten gespeichert und an den Transaktionsserver übermittelt.

Nach Abschluss des Registrierungsprozesses (Registrierung) kann die erste Person aus ihrem dadurch aktivierten Account eine Mehrzahl an Transaktionscodierungen durch Anklicken eines entsprechenden Feldes auf der Webseite erzeugen. In einer Ausführungsform erzeugt alternativ das Transaktionssystem automatisch die Mehrzahl der Transaktionscodierungen für die registrierte erste Person zur Übermittlung an die erste Person nach Abschluss der Registrierung. Diese Mehrzahl an Transaktionscodierungen kann in Form einer elektronischen Liste, beispielsweise als elektronische Liste im pdf-Format, Word-Format oder Excel-Format, ausgestaltet sein, wobei die einzelnen Transaktionscodierungen jeweils eine Personenidentifikation für die erste Person, einen ersten Transaktionscode und einen zweiten Transaktionscode umfassen, wobei sich jede der Transaktionscodierungen in dieser erzeugten Liste eindeutig zumindest durch unterschiedliche erste und/oder zweite Transaktionscodes von den anderen übermittelten Transaktionscodierungen unterscheidet. Das Format der ersten und zweiten Transaktionscodes kann vom Fachmann im Rahmen der vorliegenden Erfindung geeignet gewählt werden. In einer Ausführungsform sind erste und zweite Transaktionscodes graphische Codes wie beispielsweise graphische Symbole. Solche graphischen Codes (Symbole) sind leicht zu erkennen und zu kommunizieren, was eine reduzierte Fehlerrate bei der Übermittlung der Transaktionscodierungen und der anschließenden Freigabe der Transaktion (bzw. deren Verweigerung) ermöglicht. Es können aber auch graphischakustische Codes (Symbole) vergeben werden, die die Wiedererkennungsrate erhöht bzw. die Fehlerrate reduziert. Die Gestaltung der Liste an Transaktionscodierungen kann dabei im Rahmen der vorliegenden Erfindung unterschiedlich ausgeführt sein. Die erzeugten Transaktionscodierungen können beispielsweise als Liste mit Listenzeilen, Listenspalten und einem gemeinsamen allgemeinen Oberteil erzeugt werden, wobei im gemeinsamen Oberteil beispielsweise die Personenidentifikation dargestellt ist. Da nach der Auswahl der ersten Person zur Ausführung der weiteren Verfahrensschritte diese festgelegt ist und mit dieser Person beispielsweise mehrere Transaktionen hintereinander durchgeführt werden könnten, benötigt eine solche Liste an Transaktionscodierungen nur eine einmalige Angabe der Personenidentifikation im Oberteil. Der Oberteil kann dabei in mehrere Bereiche mit zusätzlichen Angaben wie beispielsweise persönliche Daten etc. unterteilt sein. Die Liste der Transaktionscodierungen kann des Weiteren in einer ersten Spalte eine Nummerierung für die weiteren Kombinationen aus ersten und zweiten Transaktionscodes gemäß erster, zweiter, dritter, ... Transaktionscodierung enthalten, während in den zweiten und dritten Spalten die entsprechenden ersten und zweiten Transaktionscodes angegeben sind. Vorzugsweise sind die ersten und zweiten Transaktionscodes graphische Symbole, die eine sichere Verwendung dieser Liste durch die erste Person in ausgedruckter Form selbst aus einer gewissen Entfernung ermöglicht. Beispielsweise wird die Liste mit den Transaktionscodes hinter einem Ladentresen angebracht und die Angaben der graphischen ersten und zweiten Transaktionscodes auf der Liste mit denen des mobilen Terminals aus einer gewissen Entfernung zur Ausführung der weiteren Verfahrensschritte sicher verglichen, was bei einer reinen alphanummerischen Codierung zu einer hohen Fehlerrate bei der Dateneingabe (Ergänzung) im mobilen Terminal führen würde. Der Einsatz von graphischen Symbolen als erste und zweite Transaktionscodes (graphische Transaktionscodes) führt zu einer reduzierten Fehlerrate bei der Dateneingabe im Rahmen des erfindungsgemäßen Verfahrens und somit zu einer schnelleren Freigabe der Transaktion durch das Transaktionssystem. In einem Beispiel umfasst die Liste mit der Mehrzahl an Transaktionscodierungen mindestens eine weitere Spalte, beispielsweise angepasst zur Eintragung von Geldbeträgen für Zahlungen als Transaktionen. Diese Liste an Transaktionscodierungen kann eine unterschiedliche Anzahl an Transaktionscodierungen umfassen, beispielsweise 20 oder 100 unterschiedliche Transaktionscodierungen. Die Anzahl der Transaktionscodierungen kann durch das Transaktionssystem vorbestimmt werden oder von der ersten Person, beispielseise über ein entsprechendes Auswahlfeld auf der Webseite, so gewählt werden, wie es dem Bedarf der ersten Person entspricht.

Alternativ kann die Mehrzahl der Transaktionscodierungen der ersten Person als ausdruckbare Liste zur Verfügung gestellt werden. Das Ausdrucken kann beispielsweise über die Webseite durch Anklicken eines entsprechenden Druckfeldes vorgenommen bzw. initiiert werden. In einer Ausführungsform erfolgt die Übermittlung der Mehrzahl der Transaktionscodierungen durch das Transaktionssystem an die erste Person mittels Ausdrucken der Transaktionscodierungen auf einem Drucker der ersten Person. In einem alternativen oder ergänzenden Beispiel kann die Übermittlung der Transaktionscodierungen und gegebenenfalls auszuführende weitere Kommunikationen zwischen Transaktionssystem und erster Person über ein Smartphone der ersten Person erfolgen. Zu diesem Zweck ist eine entsprechende erste-Personen-Applikation auf dem Smartphone der ersten Person installiert, die eine Übermittlung erlaubt. Diese erste-Personen-Applikation kann der ersten Person beispielsweise über einem Applikationsspeicher zur Verfügung gestellt werden.

Die einmalige Registrierung der zweiten Person kann ebenfalls über die Webseite des Transaktionssystems unter Angabe von Daten durch die zweite Person durchgeführt werden. Beispielsweise aktiviert die zweite Person dazu ein internetfähiges Endgerät wie zum Beispiel ein Laptop, einen PC, ein Notebook oder ein Smartphone und öffnet in einem Browser die Zieladresse der Webseite des Transaktionssystems, wodurch durch Anklicken eines entsprechenden Feldes der Registrierungsprozess für das Transaktionssystem gestartet wird. Der Fachmann ist im Rahmen der vorliegenden Erfindung in der Lage, einen geeigneten Registrierungsprozess für das Transaktionssystem zur Verfügung zu stellen.

In einer alternativen Ausführungsform geschieht das Übermitteln der Transaktions-Applikation an das mobile Terminal der zweiten Person durch ein Herunterladen der Transaktions-Applikation beispielsweise über einen Direktlink des mobilen Terminals mit dem Browser der Webseite des Transaktionsystems oder von einer Webseite, die Applikationen zum Herunterladen anbietet (z.B. ein sogenannter Appstore). Die zweite Person installiert, beispielsweise nach dem Herunterladen, die Transaktions-Applikation auf dem mobilen Terminal. Beispielsweise installiert sich die Transaktions-Applikation nach dem Herunterladen auf dem mobilen Terminal automatisch selber. Diese automatische Installation kann auch erfolgen, wenn die Transaktions-Applikation alternativ beispielsweise von einem Speicherchip oder einer CD-ROM auf das mobile Terminal hochgeladen wurde. Zum Herunterladen der Transaktions-Applikation muss nicht zwingend eine vorangehende Registrierung der zweiten Person beim Transaktionssystem durchgeführt worden sein.

In einer Ausführungsform startet ein Erststart der installierten Transaktions-Applikation auf dem mobilen Terminal nach Aufbau einer drahtlosen Datenverbindung zum Transaktionsserver den Schritt des Registrierens für die zweite Person automatisch. In einer bevorzugten Ausführungsform werden Kontaktdaten zum Aufbau der drahtlosen Datenverbindung durch die Transaktions-Applikation automatisch zum Transaktionsserver übermittelt. Diese Registrierung der zweiten Person kann dabei aus einem mehrstufigen Registrierungsprozess bestehen. Die Transaktions-Applikation lädt zuerst ein Registrierungsformat vom Transaktionsserver herunter. Die zweite Person (z.B. der spätere Käufer einer Ware in einem Laden) gibt seinen Namen, E-Mail-Adress etc. in das elektronische Formular ein. Die Angabe einer postalischen Anschrift kann je nach Bezahlungsmethode z.B. bei einem elektronischen Lastschriftverfahren (ELV) erfoderlich sein. Die zweite Person muss für die Ausführung des Verfahrens über eine gültige E-Mail-Adresse verfügen, an die weitere Übermittlungen durch den Transaktionsserver später erfolgen können. Diese Angaben dienen zur Identifikation der zweiten Person im Transaktionssystem. Des Weiteren kann die zweite Person eine Zugangsberechtigung erstellen, beispielsweise eine vierstellige Sicherheits-PIN, wobei erst nach deren korrekter Eingabe die Transaktions-Applikation auf dem mobilen Terminal der zweiten Person zur Ausführung des erfindungsgemäßen Verfahren gestartet werden kann. Zum Abschluss des ersten Schritts werden dann die eingegebenen Daten von der zweiten Person mittels Anklicken eines entsprechenden Feldes auf dem elektronischen Formular bestätigt. Im nächsten Schritt kann die zweite Person ihre transaktionsrelevanten Daten in das elekronische Formular eingeben. Beispielsweise werden für eine Bezahlung eines Kaufpreises als die freizugebene Transaktion die Kontodaten wie Name des Kontoinhabers, Name der Bank, wo das Konto unterhalten wird, die Kontonummer und die Bankleitzahl angegeben. Die vorliegende Erfindung ist auch für alternative Zahlungssysteme nutzbar. Beispielsweise kann bei Giropay ein Guthaben für die Nutzung des erfindungsgemäßen Verfahrens aufgeladen werden. Zur Abwicklung der Zahlung müssten dann die notwendigen Daten für ein Login auf dem mobilen Bankkonto der ersten Person mit geheimen Nutzernamen und PIN eingegeben werden. Bei der gewünschten Verwendung von elektronischen Lastschriftverfahren könnten weitere Identifikationsmaßnahmen für die zweite Person erforderlich sein, weshalb weitere Daten in diesem Schritt für die zweiten Nutzerdaten eingegeben werden müssten. Die Zahlung erfolgt jeweils nach Freigabe durch das Transaktionssystem. Zum Abschluss des zweiten Schritts werden die eingegebenen Daten von der zweiten Person mittels Anklicken eines entsprechenden Feldes auf dem elektronischen Formular bestätigt. Eventuell findet bei der Eingabe der transaktionsrelevanten Daten eine Plausibilitätsprüfung statt, um zu verhindern, dass die später freigegebene Transaktion aufgrund von fehlerhaften Nutzerdaten nicht durchgeführt werden kann. Die eingegebenen Daten werden Schritt für Schritt oder als Gesamtheit an den Transaktionsserver übermittelt.

Zum Abschluss der Registrierung erhält die zweite Person eine E-Mail des Transaktionsservers, die einen sicheren Bestätigungslink enthält, dem die zweite Person folgt. Durch den Link gelangt die zweite Person auf eine nur für die individuelle zweite Person erzeugte sichere Webseite (spätere andere zweite Personen erhalten einen entsprechenden Link auf eine andere Webseite). Das Transaktionssystem identifiziert die zweite Person und ordnet die E-Mail-Adresse den zweiten Nutzerdaten zu. Das Transaktionssystem verfügt nun über vollständige zweite Nutzerdaten der zweiten Person. Der Registrierungsprozess endet hiermit. Ab nun kann die Transaktions-Applikation zur Ausführung des erfindungsgemäßen Verfahrens eingesetzt werden.

In einer Ausführungsform erfolgt der Schritt des Auswählens der ersten Person über das mobile Terminal anhand von Daten, die vom Transaktionsserver an das mobile Terminal übermittelt werden. Die Daten zu den ersten Personen werden in einer geeigneten Form im Anzeigeelement des mobilen Terminals dargestellt. Diese geeignete Form umfasst vorzugsweise ein Symbol oder Logo, was das Geschäft der ersten Person für die zweite Person erkennbar bezeichnet. Zusätzlich können je nach Informationsbedarf der zweiten Person zusätzliche Daten zu der ersten Person direkt mit angezeigt oder durch Anklicken des Symbols oder Logos nachfolgend angezeigt werden. Die Daten der ersten Personen sind in den Nutzerdaten der ersten Personen verfügbar.

In einer Ausführungsform umfasst der Schritt des Auswählens der ersten Person die folgenden Schritte: (i) die automatische Positionsortung des mobilen Terminals durch das Transaktionssystem, (ii) die Übermittlung von Daten aller erster Personen, die sich in einem Bereich um das mobile Terminal herum befinden, (iii) das Darstellen der Daten im Anzeigeelement des mobilen Terminals in einer zur Auswahl der ersten Person geeigneten Form, vorzugsweise in graphischer Form, (iv) Auswählen der ersten Person durch Betätigen einer der ersten Person zugeordneten Darstellung im Anzeigeelement. Damit eine solche Positionsortung durchgeführt werden kann, bestätigt die zweite Person vorzugsweise während der Registrierung in einem zusätzlichen Registrierungsschritt ihr Einverständnis zur Ortung der Position ihres mobilen Terminals, was später der Position der zweiten Person entspricht, sofern die zweite Person das mobile Terminal am Körper trägt. Das Einverständnis der zweiten Position zur Ortung mit einem satellitengestützten Positionsbestimmungssystem, beispielsweise GPS oder Galileo, wird als Teil der zweiten Nutzerdaten im Transaktionssystem gespeichert. Alternativ könnte eine Ortung immer via manueller Eingabe der Postleitzahl und einer nachfolgenden Auswahlliste oder durch Markieren einer Position auf einer im Anzeigeelement dargestellten digitalen Landkarte erfolgen.

Nach Starten der Transaktions-Applikation für eine bereits registrierte zweite Person wird die momentane Position des mobilen Terminal bestimmt (geortet) und entsprechend der momentanen Position die in der Umgebung befindlichen ersten Personen angezeigt. Die Position der ersten Person (z.B. der Ort des Geschäfts, das die erste Person betreibt und für das das erfindungsgemäße Verfahren zur Verfügung stehen soll) wird von der ersten Person wie voranstehend bereits beschrieben während der Registrierung der ersten Person dem Transaktionssystem angegeben und ist über die ersten Nutzerdaten für das Transaktionssystem verfügbar. Die Position der zweiten Person wird über ein Positionsortungs- und Berechnungsmittel (z.B. ein Prozessor mit einer darauf installierten Ortserkennungs- und Bestimmungssoftware), das mit einem entsprechenden Positionsbestimmungssystem verbunden ist, bestimmt und mit den in den ersten Nutzerdaten vorhandenen Positionen der ersten Personen verglichen. Befinden sich erste Personen innerhalb eines vordefinierten Abstands zur zweiten Person, so werden die Daten zu den ersten Personen in diesem Abstand an das mobile Terminal übermittelt und in einer geeigneten Form im Anzeigeelement des mobilen Terminal dargestellt. Diese geeignete Form umfasst vorzugsweise ein Symbol oder Logo, was das Geschäft der ersten Person für die zweite Person erkennbar bezeichnet. Zusätzlich können je nach Informationsbedarf der zweiten Person zusätzliche Daten zu der ersten Person direkt mit angezeigt oder durch Anklicken des Symbols oder Logos nachfolgend angezeigt werden. Der Abstand, innerhalb dessen die Daten der sich dort befindlichen ersten Personen übermittelt werden, kann ein kreisrundes Gebiet definieren, dessen Mittelpunkt die Position der zweiten Person ist. Dadurch wird der Rechenaufwand zur Auswahl der ersten Personen, für die dann Daten an das mobile Terminal übermitelt werden sollen, verringert. In einem anderen Beispiel beträgt der Abstand eine Wegstrecke, die die zweite Person entlang der verfügbaren Wege zurücklegen muss, um zur ersten Person zu gelangen. Gerade in Städten kann ein kurzer Abstand entlang der Luftlinie zwischen zwei Punkten nicht begehbar sein, weil beispielsweise Grundstücke oder Häuser dort keine Durchgänge besitzen. Bei der Berechnung der erforderlichen Wegstrecke zwischen den Positionen der zweiten Person und möglicher erster Personen (beispielsweise entlang eines Bürgersteig um einen Häuserblock herum in eine andere Straße) entspricht das Auswahlkriterium "Abstand" nicht dem Luftlinienabstand, sondern einer realistischen Wegstrecke, was zu einer besseren Nutzerzufriedenheit für die zweite Person führt. Damit können erste Personen angeboten werden, die auch tatsächlich innerhalb des bestimmten Abstands erreichbar sind. Der Wert des Abstands, innerhalb dessen Daten zu ersten Personen an das mobile Terminal übermittelt werden, kann beispielsweise im Transaktionssystem vordefiniert sein oder über ein entsprechendes Auswahlfeld des eletronischen Formulars für die Registrierung der zweiten Person von dieser gewählt werde. Diese Wahl kann dabei jederzeit über eine neue Eingabe zu den zweiten Nutzerdaten geändert werden. Die zweite Person wählt anhand der im Anzeigeelement dargestellten Daten einer der ersten Personen aus, beispielsweise durch Anklicken des Symbols oder Logos der ersten Person mittels eines Fingers bei einem druckempfindlichen Anzeigeelement oder mittels eines Cursors. Hierbei entspricht vorteilhaft das Symbol oder Logo der entsprechenden Personenidentifikation.

Nachdem eine gewünschte erste Person ausgewählt wurde, beispielsweise anhand der vom Transaktionsserver übermittelten Daten für in Frage kommenden ersten Personen, wird das Verfahren zur Freigabe einer Transaktion weitergeführt. Dazu kann die zweite Person in einer Ausführungsform beispielsweise den Sicherheits-PIN zur Freischaltung der nachfolgenden Verfahrensschritte eingeben. Dazu wählt die zweite Person (Kunde) aus einem Menü der Transaktions-Applikation ein entsprechendes Feld aus, gibt den Sicherheits-PIN ein und bestätigt die Eingabe. Diese Eingabe wird dann durch den Transaktionsserver verifiziert. In einer Ausführungsform macht die zweite Person anschließend weitere Eingaben zur auszuführenden Transaktion in entsprechend durch die Transaktions-Applikation im Anzeigeelement angebotene Felder wie beispielsweise den zu zahlenden Preis für eine Ware, wobei der eingegebene Preis durch Anklicken eines Bestätigungsfeldes vor Übermittlung an den Transaktionsserver bestätigt wird. Nach der Bestätigung übermittelt die Transaktions-Applikation automatisch die Transaktionsdaten (wie beispielsweise ein zu zahlender Preis) an den Transaktionsserver, der daraufhin eine Transaktionscodierung aus der Mehrzahl der der ersten Person übermittelten Transaktionscodierungen auswählt und übermittelt von dieser im Transaktionssystem ausgewähten Transaktionscodierung, im nachfolgenden erste Transaktionscodierung genannt, zumindest einen ersten Teil dieser ersten Transaktionscodierung an das mobile Terminal der zweiten Person. Der Begriff "erste Transaktionscodierung" bezeichnet hierbei nicht unbedingt die erste Transaktionscodierung oder die oberste noch nicht verwendete Transaktionscodierung auf der Liste der Transaktionscodierungen, die die erste Person von Transaktionssystem übermittelt bekommen hat, sondern bezeichnet lediglich eine bestimmte Transaktionscodierung aus der Mehrzahl der Transaktionscodierungen. Die erste Transaktionscodierung kann beispielsweise auch zufällig vom Transaktionsserver aus der Mehrzahl der der ersten ausgewählten Person übermittelten Transaktionscodierungen ausgewählt sein. Dieser übermittelte erste Teil der Transaktionscodierung dient zum einen zur Verifikation der ersten Person. Zum anderen dient dieser übermitelte erste Teil zur Verifikation der Transaktion, sofern der übermittelte erste Teil so ergänzt wird, dass die Verknüpfung aus erstem Teil und Ergänzung der von Transaktionssystem ausgewählten Transaktionscodierung (erste Transaktionscodierung) entspricht.

In einer Ausführungsform umfasst der erste Teil die Personenidentifikation der ersten Person und den ersten Transaktionscode. Die somit vom Transaktionsserver an das mobile Terminal übermittelten Prüfsymbole "Personenidentifikation" und "erster Transaktionscode" verifizieren eindeutig die erste Person und die Transaktion mit zugehöriger Transaktionscodierung. In einer bevorzugten Ausführungsform wird der übermittelte erste Teil der ersten Transaktionscodierung auf dem Anzeigeelement zur Ermöglichung der Kenntnisnahme durch die erste Person und zur Bestätigung des richtigen Erkennens der ersten Person dargestellt. Die Darstellung der Personenidentifikation und des ersten Transaktionscodes auf dem Anzeigeelemenet des mobilen Terminals wird der ersten Person gezeigt und von dieser auf Richtigkeit geprüft, insbesondere die Personenidentifikation zur Abwicklung der Transaktion auf den Namen der richtigen ersten Person. Alternativ kann die zweite Person die dargestellten Symbole der ersten Person auch mündlich mitteilen. Durch die Darstellung im Anzeigeelement wird zumindest die Möglichkeit einer Inaugenscheinnahme der Symbole durch die erste Person ermöglicht. Vorzugsweise sind diese Symbole graphische Symbole, was den Prüfschritt erleichtert und zu einer geringeren Fehlerquote beim Fortführen des erfindungsgemäßen Verfahrens führt. Die erste oder zweite Person bestätigt im Anzeigeelement auf einem durch die Transaktions-Applikation bereitgestellten Bestätigungsfeld die Richtigkeit der Personenidentifikation und des ersten Transaktionscodes. Diese Bestätigung wird vom mobilen Terminal an den Transaktionsserver übermittelt.

Sofern der erste Teil die Personenidentifikation und den ersten Transaktionscode umfasst, umfasst der Schritt des Ergänzens in einer Ausführungsform das Auswählen eines zweiten Transaktionscodes mit Hilfe der ersten Person aus einer Mehrzahl unterschiedlicher Transaktionscodes mit dem mobilen Terminals der zweiten Person als die Ergänzung, wobei nur einer der auswählbaren Transaktionscodes dem zweiten Transaktionscode der ersten Transaktionscodierung entspricht. Dieser zweite Transaktionscode kann nur mit Hilfe der ersten Person richtig ausgewählt werden, da nur der ersten Person die vollständige erste Transaktionscodierung bekannt ist. Somit stellt die einzige richtige Ergänzung zum übermittelten ersten Teil der ersten Transaktionscodierung die Verifikation für das Transaktionssystem dar, die eine Freigabe der Transaktion bewirken kann. Dass diese einzige richtige Ergänzung aus einer Mehrzahl unterschiedlicher Transaktionscodes ausgewählt werden muss, verringert sich das Risiko einer unauthorisierten Freigabe der Transaktion deutlich. In einer Ausführungsform wird die Mehrzahl der unterschiedlichen Transaktionscodes, bevorzugt graphische Transaktionscodes, zum Auswählen des zweiten Transaktionscodes, bevorzugt ein graphischer zweiter Transaktionscode, im Anzeigeelement des mobilen Terminals als Anordnung der unterschiedlichen Transaktionscodes dargestellt. Die Darstellung der unterschiedlichen Transaktionscodes zur Auswahl eines davon kann beispielsweise von der Transaktions-Applikation auf dem mobilen Terminal selbst erzeugt werden. In einer Ausführungsform wird die Mehrzahl der Transaktionscodes vom Transaktionsserver an das mobile Terminal als Reaktion auf die Bestätigung des richtigen Erkennens der ersten Person übermittelt. Nur ein einziger zweiter Transaktioncode kann den bereits übermittelten ersten Teil (Personenidentifikation und erster Transaktionscode) der ausgewählten ersten Transaktioncodierung so vervollständigen, dass die erste Transaktionscodierung durch Auswahl des richtigen zweiten Transaktionscodes reproduziert wird. In einer bevorzugten Ausführungsform werden die Transaktionscodes zur Auswahl des zweiten Transaktionscodes auf dem Anzeigeelement als Anordung mit zufälliger Positionierung und/oder Reihenfolge der Transaktionscodes dargestellt. Somit ist die Wahrscheinlichkeit hoch, dass der richtige zweite Transaktionscode nur mit Hilfe der ersten Person ausgewählt werden kann, was zu einer hohen Verfahrenssicherheit führt. Die erste Person nennt der zweiten Person den auszuwählenden richtigen zweiten Transaktionscode, woraufhin die zweite Person (oder die erste Person) im Anzeigeelement diesen Transaktionscode auswählt. In einer Ausführungsform erfolgt dabei das Auswählen des zweiten Transaktionscodes durch eine Betätigung eines der Transaktionscodes, vorzugsweise durch Drücken auf einen der Transaktionscodes bei einem als Touch-Screen ausgeführeten Anzeigeelement oder durch Anklicken eines der Transaktionscodes mittels eines Cursors im Anzeigeelement. Gerade die Verwendung von graphischen Symbolen kann die Fehlerrate bei der Auswahl des richtigen zweiten Transaktionscodes deutlich verringern, was eine möglichst fehlerfreie Weiterführung des erfindungsgemäßen Verfahrens ermöglicht. Nach dem Bestätigen wird der ausgewählte Transaktionscode an den Transaktionsserver übermittelt.

In einer Ausführungsform löst das Auswählen ein automatisches Übermitteln des ausgewählten zweiten Transaktionscodes vom mobilen Terminal an den Transaktionsserver aus. Die erste Person kann die entsprechende Transaktionscodierung nun von ihrer Liste an Transaktionscodierungen streichen, da eine Transaktionscodierung aus Sicherheitsgründen im Transaktionssystem immer nur einmal verwendet werden kann. Der Transaktionsserver muss nun überprüfen, ob der im letzten Schritt vom mobilen Terminal übermittelte Transaktionscode der richtige Transaktionscode ist, also der Transaktionscode, der dem zweiten Transaktionscode der ersten Transaktionscodierung entspricht. Dazu verknüpft der Transaktionsserver die von ihm übermittelten Personenidentifikation und des ersten Transaktionscodes mit dem vom mobilen Terminal ausgewählten übermittelten Transaktionscode als zweiter Transaktionscode zu einer ergänzten Transaktionscodierung und vergleicht diese ergänzte Transaktionscodierung in einem Vergleichsmittel (z.B. ein entsprechend ausgestalteter Prozessor) mit der der ersten Person zugeordneten gespeicherten ersten Transaktionscodierung. Bei einer Gleichheit der ergänzten Transaktionscodierung mit der ersten Transaktionscodierung wird die Freigabe der Transaktion durch den Transaktionsserver erteilt. Anschließend veranlasst der Transaktionsserver im Transaktionssystem die für die Ausführung der Transaktion notwendigen weiteren Schritte und übermittelt eine Freigabebestätigung an das mobile Terminal. Diese Freigabebestätigung dient als virtuelle, elektronische Quittung der Transaktion. Die zweite Person zeigt der ersten Person diese Freigabebestätigung und erhält beispielsweise im Anschluss daran von der ersten Person die mit diesem Verfahren bezahlte Ware. Außerdem kann die erste Person durch die Freigabebestätigung feststellen, dass die Freigabe der Transaktion eine Transaktion betrifft, die tatsächlich an die erste Person gerichtet ist. Dazu enthält die Freigabebestätigung beispielsweise die vollständige erste Transaktionscodierung, die während des Datenverkehrs zwischen mobilem Terminal und Transaktionsserver übermittelt wurde und kann über den Vergleich mit der ersten Transaktionscodierung auf der Liste der Transaktionscodierungen die Quittung noch einmal verifizieren. Außerdem beispielsweise sendet das Transaktionssystem am Ende eines jeden Tages eine automatische E-Mail an die zweite Person, die die an diesem Tag von der zweiten Person getätigten Transaktionen als Nachweis mit erster Person und Uhrzeit auflistet. Durch die automatische Rückmeldung an die zweite Person behält diese einen dokumentierten Überblick über die getätigten Transaktionen. Außerdem wird dadurch das Risiko eines Missbrauchs minimiert. Bei fehlerhaften Transaktionen kann die zweite Person sich gegebenenfalls an das Transaktionssystem und/oder an die erste Person zur Klärung wenden. Das Transaktionssystem speichert dabei die Transaktionscodierungen, die für Freigaben bereits verwendet wurden. Somit ist eine erneute Übermittlung eines ersten Teils einer Transaktionscodierung an ein mobiles Terminal einer zweiten Person, der bereits zuvor an die gleiche oder an eine andere zweite Person für die Freigabe einer anderen Transaktion übermittelt wurde, ausgeschlossen. Somit kann jede Transaktionscodierung nur einmal für eine Freigabe verwendet werden, was die Sicherheit der Freigaben weiter erhöht.

Die Erfindung betrifft des Weiteren eine Transaktions-Applikation gespeichert auf einem Speichermedium, die geeignet ist, das erfindungsgemäße Verfahren in Verbindung mit einem erfindungsgemäßen Transaktionssystem auszuführen. Die Transaktions-Applikation kann dabei auf externen Datenträgern wie beispielsweise SIM-Karte, Chips, Speichersticks, CD-ROMs etc. zur zweiten Person zur Installation auf dem mobilen Terminal übermittelt werden, oder die zweite Person kann die Transaktions-Applikation vom Transaktionssystem selber oder von einer Webseite, die Applikationen vertreibt, herunterladen. Da die Transaktions-Applikation etliche wesentliche Bestandteile der Transaktionsfreigabe durchführt, besteht für die Transaktions-Applikation ein eigenes Schutzbedürfnis.

Die Erfindung betrifft des Weiteren ein mobiles Terminal mit einem Anzeigeelement, das mit einem Transaktionsserver eines erfindungsgemäßen Transaktionssystems über eine drahtlose Datenverbindung zu einem Datenaustausch verbindbar ist und auf dem eine erfindungsgemäße Transaktions-Applikation zur Ausführung auf dem mobilen Terminal installiert ist und auf dem mobilen Terminal ausgeführt werden kann. Der Begriff "mobiles Terminal" umfasst hierbei alle Geräte mit einem Anzeigeelement, die eine drahtlose Datenverbindung mit dem Transaktionsserver unterhalten können und applikations- und E-Mail-fähig sind, wie beispielsweise ein Smartphone. Die drahtlose Datenverbindung kann beispielseise über ein Mobilfunknetz oder ein WLAN-Netz erfolgen.

Die Erfindung betrifft des weiteren ein Transaktionssystem zur Freigabe einer Transaktion im Rahmen eines Geschäfts zumindest zwischen einer ersten und einer zweiten Person, umfassend einen Applikationsspeicher zum Speichern einer Transaktions-Applikation gemäß der vorliegenden Erfindung, eine Nutzerdatenbank zur Speicherung zumindest erster Nutzerdaten der ersten Person und zweiter Nutzerdaten der zweiten Person, ein Erzeugungsmittel zur Erzeugung von Transaktionscodierungen, die jeweils eine Personenidentifikation für die erste Person, einen ersten Transaktionscode, vorzugsweise einen graphischen ersten Transaktionscode, und einen zweiten Transaktionscode, vorzugsweise einen graphischen zweiten Transaktionscode, umfassen, und einen zumindest mit dem Applikationsspeicher, der Nutzerdatenbank und dem Erzeugungsmittel über Datenleitungen verbundenen Transaktionsserver, der dazu ausgestaltet ist
- zumindest die ersten und zweiten Nutzerdaten bereitzustellen,
- mit geeigneten Datenübertragungsmitteln einer Mehrzahl an erzeugten Transaktionscodierungen an die erste Person zu übermitteln, wobei sich jede der übermittelten Transaktionscodierungen eindeutig zumindest durch unterschiedliche erste und/oder zweite Transaktionscode von den anderen übermittelten Transaktionscodierungen unterscheidet,
- eine drahtlose Datenverbindung mit dem mobilen Terminal der zweiten Person herzustellen,
- ein Auswählen der ersten Person über das mobile Terminal der zweiten Person zu ermöglichen und nach deren Auswahl einen ersten Teil einer ersten Transaktionscodierung an das mobile Terminal der zweiten Person zur Ergänzung zu übermitteln,
- eine vom mobilen Terminal übermittelte Ergänzung zu empfangen und mit einem Vergleichsmittel den vom Transaktionsserver übermittelten ersten Teil der ersten Transaktionscodierung mit der übermittelten Ergänzung zu einer ergänzten Transaktionscodierung zu verknüpfen und die ergänzte Transaktionscodierung mit der den Nutzerdaten der ersten Person zugeordneten gespeicherten ersten Transaktionscodierung zu vergleichen, und
- nach festgestellter Gleichheit der ergänzten und gespeicherten ersten Transaktionscodierung die Freigabe für diese Transaktion zu geben und eine Freigabebestätigung an das mobile Terminal zu übermitteln oder nach festgestellter Ungleichheit die Freigabe zu verweigern und die Verweigerung an das mobile Terminal zu übermitteln.

In einer Ausführungsform ist der Transaktionsserver dazu ausgestaltet, mit geeigneten Datenübertragungsmitteln die Transaktions-Applikation an ein mobiles Terminal der zweiten Person zu übermitteln. Diese direkte Übermittlung vermeidet zusätzliche Benutzerhandlungen für die Inbetriebnahme der Transaktions.-Applikation und ist daher benutzerfreundlich. Vorzugsweise installiert sich die Transaktions-Applikation nach der Übermittlung direkt selber auf dem mobilen Terminal. Vorzugsweise übermittelt die Transaktions-Applikation die Verbindungsdaten zum mobilen Terminal an den Transaktionsserver. Hiermit kann zugleich die benötigte drahtlose Verbindung zwischen dem mobilen Terminal und dem Transaktionsserver verifiziert werden.

In einer Ausführungsform umfasst das Transaktionssystem eine Webseite zum Registrieren zumindest der ersten Person beim Transaktionssystem und zur Eingabe von Daten zumindest durch die erste Person zur Erstellung von ersten Nutzerdaten. Die Webseite zur Registrierung kann aber auch von weiteren Personen zu einer entsprechenden Registrierung verwendet werden. Vorzugsweise registrieren sich die zweiten Personen aber über die Transaktions-Applikation nach deren Erststart auf dem mobilen Terminal.

Ein Vorteil des erfindungsgemäßen Transaktionssystems ist die minimale Anzahl an benötigten elektronischen Geräten auf Seiten der ersten und zweiten Personen, wie voranstehend beschrieben. Die erste Person benötigt lediglich einer Mehrzahl an Transaktionscodierungen, übermitelt durch das Transaktionssystem. Die Art und die Weise, wie die erste Person diese Liste empfängt bzw. erhält, können unterschiedlich ausgestaltet sein. Diese Übermittlung kann zu einem elektronischen Gerät der ersten Person, beispielsweise einem internetfähigen Laptop, Computer, Smartphone etc erfolgen. Alternativ kann das Transaktionssystem die Mehrzahl an Transaktionscodierungen auch als Liste in Papierform der ersten Person mittels eines Postdienstes schicken, so dass für den Empfang der Liste überhaupt kein elektronisches Gerät auf Seiten der ersten Person benötigt wird. Für die Freigabe einer Transaktion bei vorhandenen ersten und zweiten Nutzerdaten wird mit dem erfindungsgemäßen Verfahren nur ein mobiles Gerät mit einer Datenverbindung zum Transaktionsserver der zweiten Person benötigt. Damit kann das Transaktionssystem von jeder ersten Person unabhängig von ihrer gerätemäßigen Ausstattung verwendet werden. Damit ist das erfindungsgemäße Verfahren insbesondere vorteilhaft für erste Personen, die ein kleines, ggf. räumlich enges Geschäft betreiben und dennoch den Kunden (zweite Personen) einen erhöhten Service durch die Ermöglichung von elektronischen Transaktionsfreigaben bieten wollen, beispielsweise bargeldlosen Bezahlungen. Da das Verfahren die Durchführung aller Arten von Transaktionen, insbesondere alle Arten von unterschiedlichen Zahlungssystemen und Zahlungsweisen mittels Freigabe und ggf. weiterer Unterstützung durch nachfolgende Ausführung bzw. Anweisung der Transaktion bei an der Transaktion beteiligten Dritten (z.B. die Banken von erster und zweiter Person) unterstützt, ist es auch für die zweiten Personen vorteilhaft. Sie können beispielsweise bargeldlos dort bezahlen, wo es wegen der mangelnden Ausstattung der ersten Personen bisher nicht möglich war.

Die Erfindung betrifft des Weiteren ein Bezahlsystem mit einem Transaktionssystem gemäß der vorliegenden Erfindung, mindestens einem mobilen Terminal gemäß der vorliegenden Erfindung, das mit dem Transaktionsystem über eine drahtlose Datenverbindung zur Ausführung eines Verfahrens gemäß der vorliegenden Erfindung verbunden ist, und mit mindestens einem Geldverwaltungssystem, das mit dem Transaktionssystem verbunden ist, um die Transaktion nach Freigabe durch das Transaktionssystem zwischen erster und zweiter Person auszuführen. Geldverwaltungssysteme im Sinne der vorliegenden Erfindung sind beispielsweise Banken, bei denen erste und zweite Personen Konten unterhalten. Im dem erfindungsgemäßen Bezahlsystem kann beispielsweise die erste Person so auch ein elektronisches Kassenbuch führen. Dazu sendet das Transaktionssystem eine Auflistung der erfolgten Transaktionen mit Angaben zu den Transaktionsdaten (beispielsweise zu verbuchender Betrag einer bargeldlosen Zahlung infolge der freigegebenen Transaktion, Uhrzeit etc) zu den zweiten Personen. Die erste Person kann diese Auflistung als elektronische Liste an Soll-Transaktionen (beispielsweise Soll-Zahlungen) vom Transaktionssystem erhalten und die tatsächlich auf dem Konto der ersten Person eingegangenen Beträge in diese Liste in entsprechende Felder eintragen. Auf diese Weise kann die erste Person ein elektronisches Kassenbuch führen. Dieses elektronische Kassenbuch wird beispielsweise unter den Account der ersten Person auf der Webseite des Transaktionssystems bereitgestellt. Die erste Person benötigt für die Führung eines elektronischen Kassenbuchs lediglich genau die gleichen technischen Geräte, die die erste Person zur Übermittlung der Mehrzahl an Transaktionscodierung auch benötigt. Alternative kann das elektronische Kassenbuch auch mit Hilfe der erste-Personen-Applikation auf einem Smartphone der ersten Person geführt werden.

### Kurze Beschreibung der Abbildungen

Diese und andere Aspekte der Erfindung werden im Detail in den Abbildungen wie folgt gezeigt.
- Abb.1:: eine Ausführungsform des erfindungsgemäßen Transaktionssystems.
- Abb.2:: eine Ausführungsform der zu übermittelnden Transaktionscodierungen.
- Abb.3:: eine Ausführungsform der im Anzeigeelement des mobilen Terminals dargestellten Daten zur Auswahl einer ersten Person.
- Abb.4:: eine Ausführungsform des im Anzeigeelement des mobilen Terminals dargestellten ersten Teils der ersten Transaktionscodierung übermittelt vom Transaktionsserver.
- Abb.5:: eine Ausführungsform der im Anzeigeelement des mobilen Terminals dargestellten Transaktionscodes zur Auswahl des zweiten Transaktioncodes zur Übermittlung an den Transaktionsserver.
- Abb.6:: eine Ausführungsform der im Anzeigeelement des mobilen Terminals dargestellten Freigabebestätigung übermittelt vom Transaktionsserver.
- Abb.7:: eine Ausführungsform der im Anzeigeelement des mobilen Terminals dargestellten Verweigerung der Freigabe übermittelt vom Transaktionsserver.
- Abb.8:: eine Ausführungsform des erfindungsgemäßen Verfahrens.
- Abb.9:: eine Ausführungsform des Schritts der Registrierung der ersten und zweiten Person beim erfindungsgemäßen Transaktionssystem.
- Abb.10:: eine Ausführungsform eines Bezahlsystems mit erfindungsgemäßen Transaktionssystem und Geldverwaltungssystem zur Ausführung der Transaktion nach erfindungsgemäßer Freigabe.

### Detaillierte Beschreibung der Ausführungsbeispiele

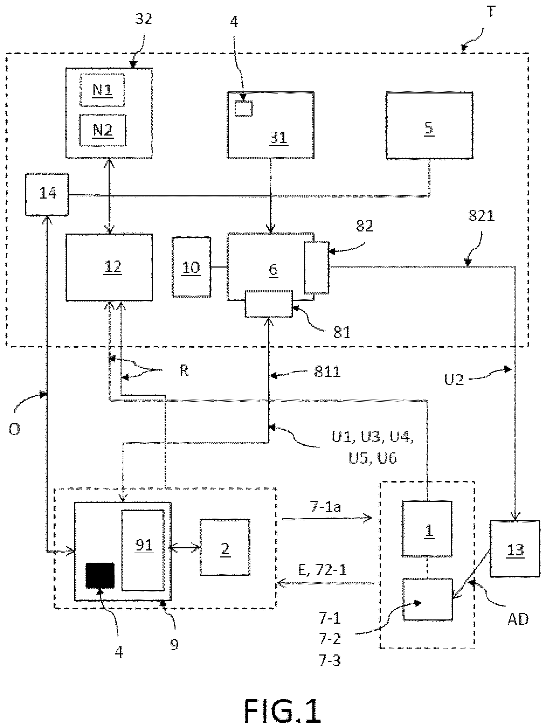

Abbildung 1 zeigt eine Ausführungsform des erfindungsgemäßen Transaktionssystems T in Verbindung mit einem mobilen Terminal 9 einer zweiten Person 2 und einer darauf installierten Transaktions-Applikation 4 zur Freigabe einer Transaktion im Rahmen eines Geschäfts zumindest zwischen einer ersten und einer zweiten Person 1, 2. Die Datenverbindung zwischen Transaktionssystem T und dem mobilen Terminal 9 der zweiten Person 2 wird über eine drahtlose Datenverbindung 811 zum Transaktionsserver 6 mit entsprechenden Datenübertragungsmitteln 81 hergestellt. Damit das Transaktionsssystem T das erfindungsgemäße Verfahren ausführen kann und nach Freigabe der Transaktion diese Transaktion auch veranlassen kann, benötigt das Transaktionssystem T Nutzerdaten N1, N2 für die ersten und zweiten Personen 1, 2, auf die der Transaktionsserver 6 über Datenverbindungen zwischen den Komponenten des Transaktionssystems T zurückgreifen kann. Damit die Nutzerdaten N1, N2 in das Transaktionssystem T eingegeben werden können, umfasst es in dieser Ausführungsform eine Webseite 12 zum Registrieren R zumindest der ersten Person 1 beim Transaktionssystem T und zur Eingabe von Daten durch zumindest die erste Person 1 zur Erstellung von ersten Nutzerdaten N1. Diese Webseite wird beispielsweise vom Transaktionsserver 6 über das Internet oder auf Client-Computern, die mit dem Transaktionsserver 6 verbunden sind, bereitgestellt. Die Webseite 12 ist auch zur Registrierung R der zweiten Person 2 zur Eingabe von Nutzerdaten N2 für die zweite Person 2 geeignet. Alternativ können die zweiten Nutzerdaten N2 auch vom mobilen Terminal 9, gegebenenfalls bei Ausführung der Transaktions-Applikation 4 an den Transaktionsserver 6 über eine drahtlose Datenverbindung 811 über das Übertragungsmittel 81 zum Transaktionsserver 6 übermittelt werden. Die Nutzerdaten N1, N2 werden in einer Nutzerdatenbank 32 im Transaktionssystem T gespeichert, worauf der Transaktionsserver 6 über Datenverbindungen Zugriff hat.

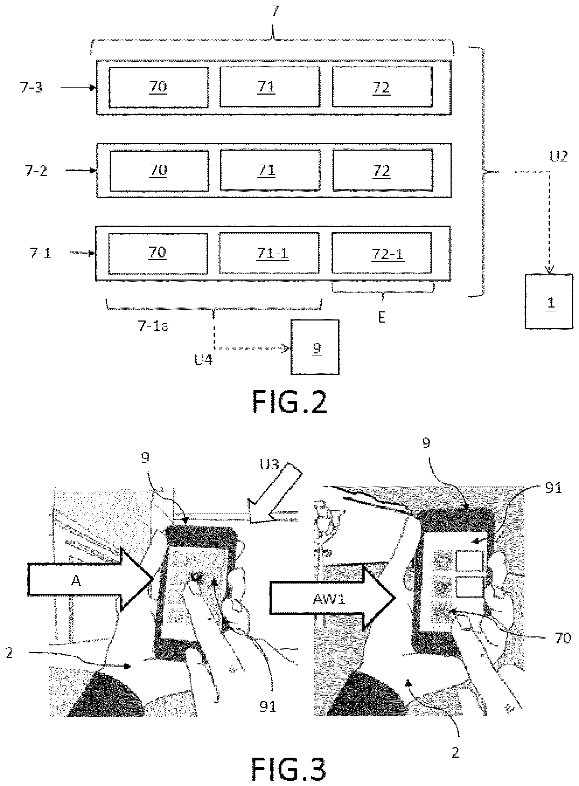

Der Transaktionsserver 6 ist in dieser Ausführungsform zusätzlich über ein Datenübertragungsmittel 82 und über eine Datenverbindung 821 mit einem Drucker 13 der ersten Person 1 verbunden. Über diese Datenverbindung 821 wird in dieser Ausführungsform eine Mehrzahl (7-1, 7-2, 7-3, ...) von Transaktionscodierungen 7 vom Transaktionsserver 6 an die erste Person übermittelt U2. Vorzugsweise erfolgt die Übermittlung U2 der Mehrzahl der Transaktionscodierungen 7 an die erste Person 1 mittels Ausdrucken AD der Transaktionscodierungen 7 auf dem Drucker 13 der ersten Person 1. Die Transaktionscodierungen 7 werden mit einem Erzeugungsmittel 5 erzeugt, das zur Übermittlung der Transaktionscodierungen 7 mit dem Transaktionsserver 6 über eine Datenleitung verbunden ist. In einer Ausführungsform umfassen die Transaktionscodierungen 7 jeweils eine Personenidentifikation 70 für die erste Person 1, einen ersten Transaktionscode 71, vorzugsweise einen graphischen ersten Transaktionscode 71, und einen zweiten Transaktionscode 72, vorzugsweise einen graphischen zweiten Transaktionscode 72, wie im Detail noch in Abbildung 2 dargestellt ist. Jede der an die erste Person 1 übermittelten U2 Transaktionscodierungen 7 unterscheidet sich eindeutig zumindest durch unterschiedliche erste und/oder zweite Transaktionscodes 71, 72 von den anderen übermittelten Transaktionscodierungen 7.

Der Applikationsspeicher 31 ist außerdem zum Speichern der Transaktions-Applikation 4 vorgesehen, damit diese vom Transaktionssystem T über den Transaktionsserver 6 heruntergeladen oder auf eine andere Weise zum mobilen Terminal 9 übertragen werden kann, um dann auf diesem installiert zu werden, um das erfindungsgemäße Verfahren durchführen zu können. Dazu ist der Transaktionsserver 6 mit geeigneten Datenübertragungsmitteln 81 ausgestattet, um die Transaktions-Applikationan 4 über die drahtlose Datenverbindung 811 an das mobile Terminal 9 der zweiten Person 2 zu übermitteln U1. Über diese Datenverbindung 811 übermittelt U3 dem Transaktionsserver 6 auch Daten geeignet zum Auswählen AW1 der ersten Person 1 an das mobile Terminal 9 der zweiten Person 2, die zur Auswahl der ersten Person 1 auf dem Anzeigeelement 91 des mobilen Terminal 9 in geeigneter Form dargestellt werden. Nach Auswahl AW1 der ersten Person 1 übermittelt U4 der Transaktionsserver 6 zur Freigabe einer Transaktion über dieselbe Datenverbindung 811 einen (ersten) Teil 7-1a einer ersten Transaktionscodierung 7-1 an das mobile Terminal 9 der zweiten Person 2. Ebenso wird über die drahtlose Datenverbindung 811 vom mobilen Terminal 9 die zur Freigabe der Transaktion ausgewählte Ergänzung E des ersten Teils 7-1a, hier beispielsweise der zweite Transaktionscode 72-1, vom mobilen Terminal 9 an den Transaktionsserver 6 übermittelt U5. Nachdem der Transaktionsserver 6 diese Ergänzung E empfangen hat, wird diese Ergänzung E mit einem Vergleichsmittel 10 mit dem ersten Teil 7-1a zu einer ergänzten Transaktionscodierung 7-E verknüpft V. Die ergänzte Transaktionscodierung 7-E wird mit der den Nutzerdaten N1 der ersten Person 1 zugeordneten gespeicherten ersten Transaktionscodierung 7-1 mit dem Vergleichsmittel 10 verglichen VG. Nach festgestellter Gleichheit der ergänzten und gespeicherten ersten Transaktionscodierung 7-E, 7-1 wird über die drahtlose Datenverbindung 811 die Freigabe F für diese Transaktion als Freigabebestätigung 11 an das mobile Terminal 9 übermittelt U6. Der Applikationsspeicher 31 kann außerdem zur Speicherung und Bereitstellung weiterer Applikationen, wie beispielsweise der erste-Personen-Applikation, vorgesehen sein.

Das Transaktionssystem ist beispielsweise dazu ausgestaltet, dass zur Auswahl AW1 der ersten Person 1 die Position des mobilen Terminals 9 mit einem Modul 14 zur Ortung des mobilen Terminals 9 geortet O wird, um anhand der festgestellten Position des mobilen Terminals 9 Daten aller erster Personen 1 an das mobile Terminal 9 zu übermitteln U3, die sich in einem Bereich um das mobile Terminal 9 herum befinden. Der Bereich kann dabei vom Transaktionssystem T oder von der zweiten Person 2 geeignet gewählt werden oder vorbestimmt sein. Die Ortung O kann dabei beispielsweise über ein satellitengestütztes Positionsbestimmungssystem (z.B. GPS oder Galileo) durchgeführt werden.

Die hier dargestellten Komponenten des Transaktionssystems T (als getrichelter Bereich dargestellt) können dabei als separate Komponenten, die über Datenleitungen mit dem Transaktionsserver 6 verbunden sind, ausgestaltet sein oder als Subkomponenten im Transaktionsserver 6 intergriert sein. Die Komponenten können je nach Aufgabe vom Fachmann als Prozessoren, Datenspeicher oder anderen Arten von Bauteilen gewählt werden. Das Transaktionsystem T kann beispielsweise als Netzwerk mit einem oder mehreren Transaktionsservern 6 mit Internetverbindung oder zusätzlich ein oder mehrere Computer zur Bereitstellung der Webseite 12 (in einem Webportal) umfassen, die mit dem oder den Transaktionsserver(n) 6 und ggf. den weiteren Komponenten des Transaktionssystems T verbunden sind. In einem Client-Server-Netzwerk stellen die Transaktionsserver 6 die Server (Backend) dar, während die Computer, über die die ersten und/oder zweiten Personen 1, 2 die Webseite 12 des Tansaktionssystems T bedienen, die Clients (Frontend) bilden. Wenn im Rahmen dieser Erfindung der Begriff "Transaktionsserver" verwendet wird, schließt dies immer die Möglichkeit der Verwendung von mehreren Transaktionsservern mit ein.

Abbildung 2 zeigt eine Ausführungsform der zu übermittelnden Transaktionscodierungen. Die Transaktionscodierung 7 umfasst dabei jeweils eine Personenidentifikation 70 für die erste Person 1, einen ersten Transaktionscode 71 und einen zweiten Transaktionscode 72. Hierbei unterscheiden sich die im Erzeugungsmittel 5 erzeugten und mit dem Transaktionsserver 6 zur ersten Person 1 übermittelten U2 Transaktionscodierungen 7 eindeutig untereinander, beispielsweise zumindest durch unterschiedliche erste und/oder zweite Transaktionscodes 71, 72. Die Transaktionscodes und die Personenidentifikation können vom Fachmann geeignet gewählt werden, beispielsweise als alphanummerische Codes. Für eine bessere Erkennung der Transaktionscodierungen 7 werden vorzugsweise graphische Codes oder Symbole für die Personenidentifikation 70, den ersten Transaktionscode 71 und den zweiten Transaktionscode 72 verwendet. Die an die erste Person 1 zu übermittelnde U2 Mehrzahl an Transaktionscodierungen kann in unterschiedlichen Ausführungsformen unterschiedliche viele Transaktionscodierungen 7-1, 7-2, 7-3, ... umfassen. Die Anzahl der zu übermittelnden U2 Transaktionscodierungen 7 kann im Transaktionssystem T beispielsweise vorbestimmt oder durch die erste Person 1 über die Webseite 12 gewählt werden. Der im Verfahrensschritt (b) an das mobile Terminal 9 übermittelte U4 erste Teil 7-1a der ersten Transaktionscodierung umfasst in der in Abbildung 2 gezeigten Ausführungsform die Personenidentifikation 70 und den ersten Transaktionscode 71. In anderen Ausführungsformen kann der erste Teil 7-1a auch anders ausgeführt sein. Der nicht übermittelte Teil (zweiter Teil) der Transaktionscodierung 7-1, die richtige Ergänzung E, muss von der zweiten Person 2 über das mobile Terminal 9 ausgewählt werden, damit der erste Teil 7-1a und die später vom mobilen Terminal übermittelte U5 Ergänzung E miteinander verknüpft als ergänztes Transaktionscodierung 7-E der ersten Transaktionscodierung 7-1 entspricht. Der Ausdruck "erste Transaktionscodierung" wird in der vorliegenden Anmeldung verwendet, um die zur Freigabe der Transaktion verwendete und vom Transaktionssystem T zu prüfende Transaktionscodierung 7-1 von den anderen Transaktionscodierungen 7-2, 7-3, ... zu unterscheiden, die für diese Freigabe nicht verwendet werden. Nachdem die erste Transaktionscodierung 7-1 für eine Freigabe einer Transaktion vewendet wurde (oder deren Verwendung zum Scheitern der Freigabe führte), kann diese Transaktionscodierung nicht erneut für andere Transaktionen verwendet werden. Die verwendeten Transaktionscodierungen werden daher den Nutzerdaten zugeordnet und in der Nutzerdatenbank 32 gespeichert. Für die nächste Freigabe einer Transaktion wird eine der restlichen an die erste Person übermittelten Transaktionscodierungen 7-2, 7-3, ... verwendet. Diese nun zu verwendende Transaktionscodierung kann die numerisch folgende Transaktionscodierung 7-2 auf der Liste der übermittelten Transaktionscodierungen sein. In diesem Fall stellt nun die Transaktionscodierung 7-2 die erste Transaktionscodierung für die Ausführung des Verfahrens dar. In einer anderen Ausführungsform wird die zu verwendende Transaktionscodierung vom Transaktionsserver 6 ausgewählt, beispielsweise die Transaktionscodierung 7-3. In diesem Fall stellt nun die Transaktionscodierung 7-3 die erste Transaktionscodierung für die Ausführung des Verfahrens dar. Hier wird die Information, welche der Transaktionscodierungen für die folgende Freigabe der Transaktion ausgewählt wurde, zusammen mit dem ersten Teil (hier dann entsprechend 7-3a) an das mobile Terminal 9 übermittelt U4. Damit der entsprechende Teil E ergänzt werden kann, umfasst die übermittelte Mehrzahl an Transaktionscodierungen eine entsprechende Nummerierung 1, 2, 3, ... der einzelnen Transaktionscodierungen 7-1, 7-2, 7-3, ....

Abbildung 3 zeigt eine Ausführungsform der im Anzeigeelement 91 des mobilen Terminals 9 dargestellten Daten zur Auswahl AW1 einer ersten Person 1. Dazu wird die Transaktions-Applikation 4 von der zweiten Person 2 gestartet A, um die zu übermittelnden U3 Daten zur Auswahl AW1 der ersten Person 1 zu empfangen, wie in der linken Hälfte der Abbildung 3 dargestellt. Der Start der Transaktions-Applikation kann dabei eine Authorisierung der zweiten Person 2 mit Eingabe entsprechender Identifikationsangaben umfassen. Diese einzelnen Schritte sind hier nicht im Detail dargestellt und können vom Fachmann geeignet gewählt werden. Nach einer Positionsortung O des mobilen Terminals 9 werden die entsprechenden Daten der ersten Personen 1 mit eigenen Positionen innerhalb eines bestimmten Bereiches um die bestimmte Position des mobilen Terminals 9 herum vom Transaktionsserver 6 an das mobile Termial 9 übermittelt U3. Die ersten Personen 1 werden durch die Transaktions-Appikation 4 für eine bessere Übersichtlichkeit im Anzeigeelement 91 in einem Scroll-Down-Menü angezeigt. Hierbei werden zu einer vereinfachten Auswahl die ersten Personen über deren graphische Personenidentifikationen 70 dargestellt. Hier bezeichnet beispielsweise eine Brezel als Personenidentifikation 70 ein Bäckergeschäft der einen ersten Person 1, während eine T-Shirt als andere Personenidentifikation 70 das Bekleidungegschäft einer anderem ersten Person 1 bezeichnet. Die zweite Person 2 wählt entsprechend ihrer Wünsche eine der dargestellten ersten Personen 1 aus AW1, indem sie auf die Personenidentifikation 70 der einen gewünschten ersten Person 1 drückt, beispielsweise auf das Brezel-Symbol 70. Als Folge der Auswahl AW1 können in einer Ausführungsform weitere von Transaktionsserver 6 übermittelte Daten zur ausgewählten ersten Person 1 zusammen mit der ausgewähten Personenidentifikation 70 dargestellt werden, damit die zweite Person 2 beispielsweise anhand einer dargestellten Adresse des Bäckergeschäfts der ersten Person überprüft, ob die Auswahl der ersten Person richtig getroffen wurde. Gegebenenfalls kann die zweite Person in der Transaktions-Applikation 4 über Betätigung eines entsprechenden Feldes im Anzeigeelement 91 zurück zur Auswahl gelangen, um bei einem Irrtum eine andere Auswahl einer ersten Person 1 zu treffen.

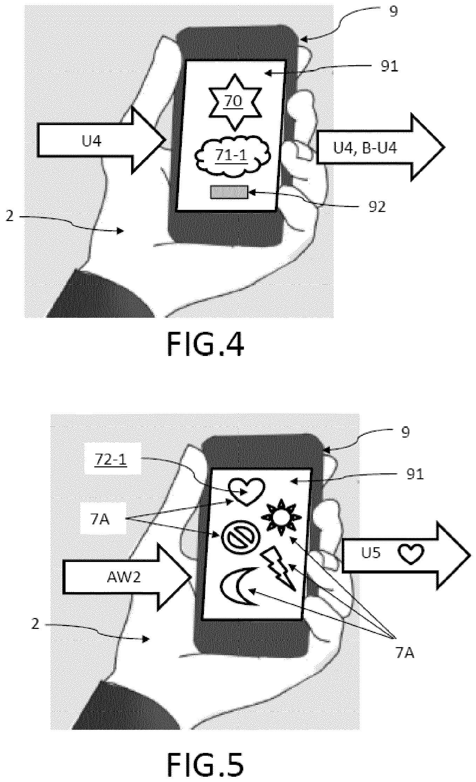

Nach einer Auswahl AW1 oder einer Bestätigung der Auswahl AW1 der ersten Person 1 übermittelt U4 der Transaktionsserver 6 den ersten Teil 7-1a der ersten Transaktionscodierung 7-1 an das mobile Terminal 9. Dieser Übermittlung können allerdings folgende Dateneingaben (Transaktionsdaten) vorausgehen. Nach Vereinbarung einer Transaktion zwischen der ersten und zweiten Person 1, 2 im Bäckergeschäft der ersten Person 1 kann die zweite Person Angaben zur gewünschten Transaktion über das Anzeigeelement 91 eingeben, die später an den Transaktionsserver übermittelt werden, beispielsweise Angabe zum Preis einer zu kaufenden Ware, zur Art der Transaktion selber (Bezahlen als Transaktion) und gegebenenfalls noch Sicherheitsangaben wie ein Sicherheits-PIN. Die Gestaltung der entsprechenden Eingabefelder in der Transaktions-Applikation kann der Fachmann geeignet wählen. In einer Ausführungsform erfolgt Übermittlung U4 des ersten Teils 7-1a der ersten Transaktionscodierung 7-1 als Reaktion auf die Übermittlung dieser Angaben an den Transaktionsserver 6. In einer anderen Ausführungsform erfolgt die Übermittlung U4 als Reaktion auf die an den Transaktionsserver 6 übermittelte Auswahl AW1 der ersten Person. Abbildung 4 zeigt eine Ausführungsform des im Anzeigeelement 91 des mobilen Terminals 9 dargestellten ersten Teils 7-1a der ersten Transaktionscodierung 7-1 übermittelt vom Transaktionsserver 6, wobei hier ein Stern 70 als Personenidentifikation 70 anstelle der Bäckerbrezel aus Abbildung 3 gezeigt wird. Dies soll die mögliche Vielfalt an verwendbaren Symbolen darstellen. Die im ersten Teil 7-1a übermittelte Personenidentifikation 70 wäre im Falle des Bäckergeschäfts die ausgewählte Brezel 70. Zusammen mit der Personenidentifikation 70 umfasst der erste Teil 7-1a der ersten Transaktionscodierung noch eine Wolke 71-1 als den ersten Transaktionscode 71-1 der ersten Transaktionscodierung 7-1. Dieser erste Teil 7-1a identifiziert eindeutig die erste Person 1 und die freizugebene Transaktion. Nach Darstellung D des ersten Teils 7-1a auf dem Anzeigeelement 91 durch die Transaktions-Applikation 4 nennt beispielsweise die zweite Person die angezeigten Symbole oder die erste Person 1 überprüft die Darstellung D auf dem Anzeigeelement 91 persönlich. Die korrekte Bezeichnung der ersten Person 1 durch die Personenidentifikation 70 und die Bezeichnung der ersten Transaktionscodierung 7-1 durch den ersten Transaktionscode 71-1 wird über Betätigen eines Bestätigungsfeldes 92 bestätigt, worauf die Bestätigung B-U4 an den Transaktionsserver übermittelt wird. Der Transaktionsserver veranlasst eine Speicherung der zusammen mit der Bestätigung B-U4 oder vorher übermittelten, zur Transaktion zugehörigen eingegebenen Transaktionsdaten in Verbindung mit der der Transaktion zugehörigen ersten Transaktionscodierung 7-1.

Zur Freigabe der Transaktion muss der im Anzeigeelement 91 dargestellte erste Teil 7-1a der ersten Transaktionscodierung 7-1 korrekt durch Auswahl des Symbols, das dem zweiten Transaktionscode 72-1 entspricht, ergänzt E werden, damit eine Übereinstimmung mit der ersten Transaktionscodierung 7-1, die vollständig nur der ersten Person 1 nach Übermittlung U2 durch den Transaktionsserver 6 bekannt ist, durch den Transaktionsserver 6 festgestellt werden kann. Die Ergänzung E kann in verschiedenen Ausführungsformen unterschiedlich durch die Transaktions-Applikation 4 unterstützt und ausgeführt werden. In einer Ausführungsform erzeugt die Transaktions-Applikation 4 nach der Darstellung D des ersten Teils 7-1a eine Mehrzahl an auswählbaren Symbolen 7A auf dem Anzeigeelement 91 dar. Die zweite Person wählt mit Hilfe der ersten Person, die beispielsweise der zweiten Person das richtige Symbol sagt, das dem zweiten Transaktioncode 72-1 der ersten Transaktionscodierung 7-1 entsprechende Symbol als die Ergänzung E zum ersten Teil 7-1a aus AW2, die in Folge der Auswahl AW2 an den Transaktionsserver 6 übermittelt U5 wird. In einer anderen Ausführungsform wird die Bestätigung des ersten Teils 7-1a, beispielsweise durch Betätigen des Bestätigungsfeldes 92, an den Transaktionsserver übermittelt, der als Reaktion auf die Bestätigung eine Mehrzahl an auswählbaren Transaktionscodes 7A an das mobile Terminal 9 übermittelt, die durch die Transaktions-Applikation 4 zur Auswahl AW2 im Anzeigeelement 91 dargestellt werden. In einer weiteren Ausführungsform erzeugt die Transaktions-Applikation 4 die Mehrzahl an auswählbaren Transaktionscodes 7A nach Bestätigung des ersten Teils 7-1a und stellt diese im Anzeigeelement 91 dar. Beispielsweise werden die auswählbaren Transaktionscodes 7A umfassend den zweiten Transaktionscode 72-1 im Anzeigeelement 91 als Anordnung mit zufälliger Positionierung und/oder Reihenfolge der Transaktionscodes 7A dargestellt. Abbildung 5 zeigt eine Ausführungsform der im Anzeigeelement des mobilen Terminals dargestellten Transaktionscodes 7A zur Auswahl des zweiten Transaktioncodes 72-1 zur Übermittlung U5 an den Transaktionsserver 6. Die hier gemäß einer der voranstehend beschriebenen Ausführungsformen erzeugte Darstellung enthält graphische Symbole (Herz, Stern, Sonne, Blitz, Mond) als auszuwählende Transaktionscodes 7A, die leicht zu unterscheiden und daher mit einer geringen Fehlerquote im Gegensatz zu alphanummerischen Codierungen ausgewählt AW2 werden können. Das Auswählen AW2 des zweiten Transaktionscodes 72-1 als Ergänzung zum ersten Teil 7-1a erfolgt beispielsweise durch Betätigung einer der Transaktionscodes 7A, vorzugsweise durch Drücken auf einen der dargestellten Transaktionscodes 7A bei einem als Touch-Screen ausgeführten Anzeigeelement 91 oder durch Anklicken eines der Transaktionscodes 7A mittels eines Cursors im Anzeigeelement 91. Infolge dieser Auswahl AW2 wird der ausgewählte Transaktionscode 72-1 als Ergänzung E an den Transaktionsserver 6 übermittelt U5. Diese Übermittlung kann automatisch als Reaktion auf die getätigte Auswahl erfolgen oder die Auswahl wird mit einem zusätzlichen Bestätigungsschritt überprüft, der dann selber die Übermittlung des ausgewählten Transaktionscodes auslöst. Beispielsweise kann die erste Person 1 selber über eine entsprechende Betätigung des mobilen Terminals 9 die Auswahl AW2 treffen, wenn die zweite Person beispielsweise aus Sicherheitsgründen die korrekte Ergänzung 72-1 nicht mitgeteilt bekommen soll. Im Falle eines zusätzlichen Bestätigungsschritts ermöglicht die Transaktions-Applikation bei Nicht-Bestätigung, zur Darstellung der Mehrzahl der auswählbaren Transaktionscodes 7A zurückzukehren, um dann die korrekte Auswahl AW2 zu treffen.Zur Überprüfung der Auswahl AW2 durch die erste Person 1 können für die Symbole in der Transaktions-Applikation 4 beispielsweise akustische Kennsignale hinterlegt sein. Beispielsweise sendet das mobile Terminal 9 bei Betätigung des Symbols "Hund" gesteuert durch die Transaktions-Applikation ein Hundegebell aus, so dass die erste Person 1 die korrekte Eingabe des zweiten Transaktionscodes 72-1 als Ergänzung auch akustisch überprüfen kann. Vorzugsweise werde daher nur Symbole verwendet, denen eindeutig ein akustisches Signal zugeordnet werden kann. Diese zugeordneten akustischen Signale werden in der Transaktions-Applikation gespeichert und gemäß der Auswahl über das mobile Terminal hörbar ausgesendet. Falls ein akustisches Signal nicht korrekt erkannt wird, kann die Auswahl AW2 weiterhin visuell ausgeführt und/oder bestätigt werden.

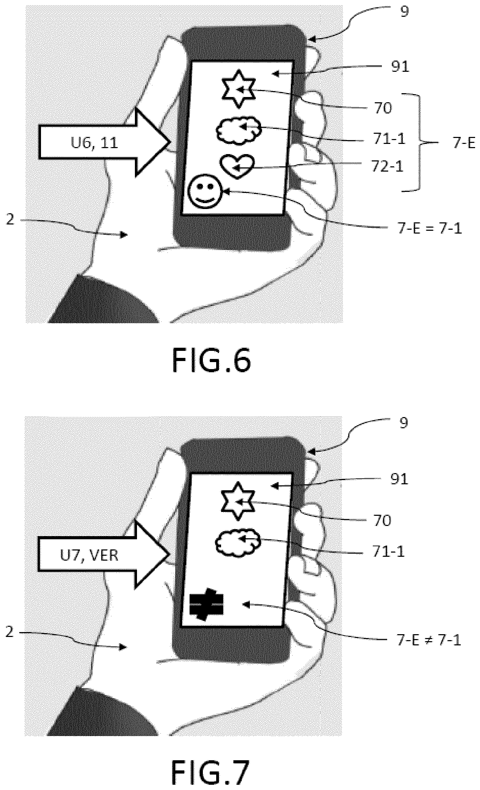

Nachdem das Transaktionssystem T mit Hilfe des Vergleichsmittels 10 aus der übermittelten ausgewählten Ergänzung E und dem übermittelten ersten Teil 7-1a mittels Verknüpfung V eine ergänzte Transaktionscodierung 7-E erzeugt hat und diese mit der ersten Transaktionscodierung 7-1 verglichen VG hat, übermittelt U6 der Transaktionsserver 6 eine Freigabe der Transaktion an das mobile Terminal 9, wie beispielhaft in Abbildung 6 dargestellt, sofern die ergänzte Transaktionscodierung 7-E der ersten Transaktionscodierung 7-1 entspricht. Als Beispiel wird die Freigabebestätigung 11 in Form einer Darstellung der kompletten ersten Transaktionscodierung 7-1 auf dem Anzeigeelement 91 zusammen mit einer Information, dass die Transaktion freigegeben ist, bestätigt. Diese Information der Freigabe kann beispielsweise als Klartext oder als entsprechendes Symbol dargestellt werden, hier beispielsweise als positives Smiley. Diese Freigabebestätigung 11 dient der ersten Person als virtuelle Quittung zum Nachweise der freigegebenen Transaktion, beispielsweise eines Bezahlvorgangs. Als Bestätigungsprozess der Transaktionsfreigabe (bzw. der Transaktion) kann das Transaktionssystem T einen Transaktionsnachweis an eine in den Nutzerdaten N2 der zweiten Person 2 hinterlegte sichere E-Mail-Adresse der zweiten Person 2 schicken. So erhält die zweite Person einen Überblick über die getätigten Transaktionen mit den dazugehörigen Daten, beispielsweise der gezahlten Beträge. Dieser Transaktionsnachweis ermöglicht eine Kontrolle der Transaktionsfreigaben durch die zweite Person und stellt daher einen Schutz von möglichem Missbrauch dar.

Falls die ergänzte Transaktionscodierung 7-E der ersten Transaktionscodierung 7-1 nicht entspricht, übermittelt U7 der Transaktionsserver 6 die Verweigerung VER der Freigabe der Transaktion an das mobile Terminal 9, wie beispielhaft in Abbildung 7 dargestellt. Als Beispiel wird die Verweigerung der Freigabe in Form einer Darstellung des ersten Teils 7-1a der ersten Transaktionscodierung 7-1 auf dem Anzeigeelement 91 zusammen mit einer Information, dass die Transaktion verweigert wurde, dargestellt. Diese Information der Verweigerung kann beispielsweise als Klartext oder als entsprechendes Symbol dargestellt werden, hier beispielsweise als Ungleichzeichen.

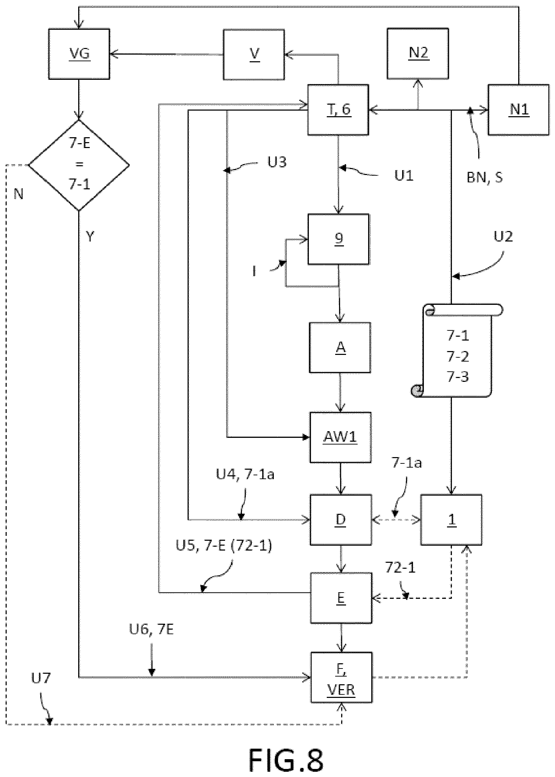

Abb.8 zeigt eine Ausführungsform des erfindungsgemäßen elektronischen Verfahrens zur Freigabe einer Transaktion im Rahmen eines Geschäfts zumindest zwischen einer ersten und einer zweiten Person 1, 2 über ein mobiles Terminal 9 der zweiten Person, die hier nicht explizit dargestellt ist. Die Transaktions-Applikation 4 wird durch das Transaktionssystem 6 an das mobile Terminal 9 übermittelt U1 und auf dem mobilen Terminal 9 installiert (automatisch oder nach zusätzlichen Bedienschritten). Außerdem werden erste Nutzerdaten N1 der ersten Person 1 und zweite Nutzerdaten N2 der zweiten Person 2 durch das Transaktionssystem T für den Zugriff durch den Transaktionsserver 6 bereitgestellt BN. Die Nutzerdaten sind dabei in einer Nutzerdatenbank 32 gespeichert S. Es werden des Weiteren eine Mehrzahl an Transaktionscodierungen 7-1, 7-2, 7-3, ... durch den Transaktionsserver 6 an die ersten Person 1 übermitelt U2, wobei jede Transaktionscodierung 7 eine Personenidentifikation 70 für die erste Person 1, einen ersten Transaktionscode 71 und einen zweiten Transaktionscode 72 umfasst, wobei sich jede der übermittelten Transaktionscodierungen 7 eindeutig zumindest durch unterschiedliche erste und/oder zweite Transaktionscodes 71, 72 von den anderen übermittelten Transaktionscodierungen 7 unterscheidet. Bei nicht vorhandener Datenverbindung zwischen Transaktionsserver und zumindest einem Drucker der ersten Person kann die Mehrzahl der Transaktionscodierungen vom Transaktionssystem T auch auf eine andere Art und Weise zur ersten Person 1 übermittelt werden (beispielsweise auf einem Datenträger als Postsendung). Die übermittelten Transaktionscodierungen 7 werden im Transaktionsystem gespeichert S und den ersten Nutzerdaten N1 der ersten Person 1 zugeordnet. Alternativ werden die übermittelten U2 Transaktionscodierungen 7 auch als Teil der Nutzerdaten in den Nutzerdaten gespeichert. Zur Ausführung des erfindungsgemäßen Verfahrens wird die Transaktions-Applikation 4 auf dem mobilen Terminal 9 der zweiten Person 2 zum Verbinden des mobilen Terminals 9 mit dem Transaktionsserver 6 und zumindest zur Steuerung der Freigabe der Transaktion zur Abwicklung des Geschäfts mit der ersten Person 1 ausgeführt A. In einem ersten Schritt wird die ersten Person 1 über das mobile Terminal 9 durch die zweite Person 2 vorzugsweise anhand von Daten, die vom Transaktionsserver 6 an das mobile Terminal 9 übermittelt U3 werden, ausgewählt AW1. Danach wird zumindest ein Teil 7-1a (erster Teil) einer ersten Transaktionscodierung 7-1 vom Transaktionsserver 6 an das mobile Terminal 9 der zweiten Person 2 übermittelt U4 und auf dem Anzeigeelement 91 zur Ermöglichung der Kenntnisnahme durch die erste Person 1 und zur Bestätigen des richtigen Erkennens der ersten Person 1 dargestellt D. Der übermittelte Teil 7-1a (erster Teil) der ersten Transaktionscodierung 7-1 wird mit Hilfe der ersten Person 1 zu einer vollständigen ersten Transaktionscodierung ergänzt E und die Ergänzung 72-1 an den Transaktionsserver 6 übermittelt 7. Der Schritt des Ergänzens E kann dabei das Auswählen AW2 eines zweiten Transaktionscodes 72 mit Hilfe der zweiter Person 2 aus einer Mehrzahl unterschiedlicher Transaktionscodes 7A mit dem mobilen Terminal 9 der zweiten Person 2 als die Ergänzung umfassen, wobei nur einer der auswählbaren Transaktionscode 7A dem zweiten Transaktionscode 72-1 der ersten Transaktionscodierung 7-1 entspricht. Vorzugsweise löst das Auswählen AW2 ein automatisches Übermitteln U5 des ausgewählten zweiten Transaktionscodes 72-1 vom mobilen Terminal 9 an den Transaktionsserver 6 aus. Im Transaktionssystem T wird der vom Transaktionsserver 6 übermittelte Teil 7-1a der ersten Transaktionscodierung 7-1 mit der Ergänzung 72-1 zu einer ergänzten Transaktionscodierung 7-E verknüpft V und die ergänzte Transaktionscodierung 7-E mit der den Nutzerdaten N1 der ersten Person 1 zugeordneten gespeicherten ersten Transaktionscodierung 7-1 verglichen VG, und bei positivem Vergleichsergebnisses ("Y") eine Freigabe F der Transaktion durch den Transaktionsserver 6 erteilt und eine Freigabebestätigung 11 an das mobile Terminal 9 übermittelt U6. Bei negativem Vergleichsergebnis ("N") wird die Verweigerung VER der Freigabe der Transaktion durch den Transaktionsserver 6 an das mobile Terminal 9 übermittelt U7. Beide übermittelten Reaktionen auf das Vergleichsergebnis 11, VER können auf dem Anzeigeelement des mobilen Terminals 9 von der ersten Person eingesehen werden (gestrichelter Pfeil in Abbildung 8).

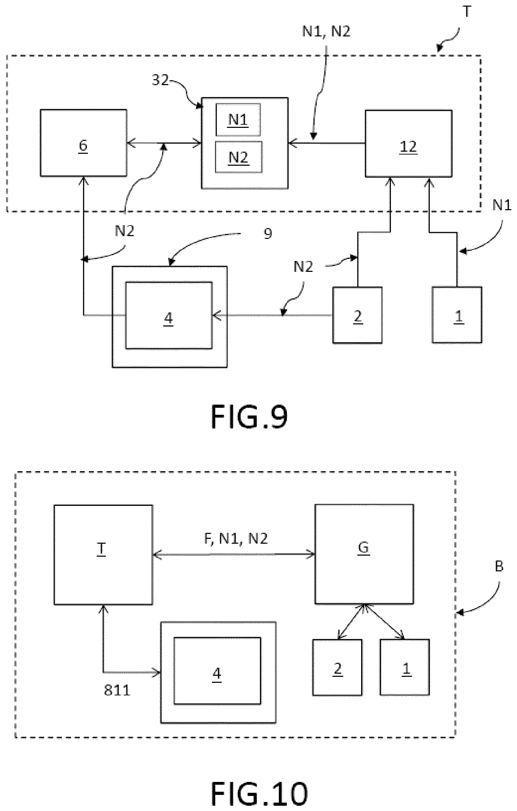

Abbildung 9 zeigt eine Ausführungsform des Schritts der Registrierung R der ersten und zweiten Person 1, 2 beim erfindungsgemäßen Transaktionssystem T zur Erstellung von ersten und zweiten Nutzerdaten N1, N2, wobei die Registrierung R der ersten und zweiten Person 1, 2 über eine Webseite 12 des Transaktionssystems T unter Angabe von Daten durchgeführt werden kann. Diese Nutzerdaten N1, N2 werden in einer Nutzerdatenbank 32 gespeichert, auf die der Transaktionsserver 6 über eine Datenverbindung zugreifen kann. Die zweite Person kann sich alternativ über die Ausführung der Transaktions-Applikation 4 registrieren. Hier startet ein Erststart der vorher auf dem mobilen Terminal 9 installierten Transaktions-Applikation 4 nach Aufbau einer drahtlosen Datenverbindung 811 zum Transaktionsserver 6 den Schritt des Registrierens für die zweite Person 2 automatisch, vorzugsweise werden die Kontaktdaten zum Aufbau der drahtlosen Datenverbindung 811 dabei durch die Transaktions-Applikation 4 automatisch zum Transaktionsserver 6 übermittelt. Die Transaktions-Applikation wurde vorher beispielsweise von einem Appstore auf das mobile Terminal 9 heruntergeladen und installiert. Die zweiten Nutzerdaten werden vom Transaktionsserver 6 empfangen und zur Speicherung S zur Nutzerdatenbank 32 weitergeleitet.

Abbildung 10 zeigt eine Ausführungsform eines Bezahlsystems B mit erfindungsgemäßen Transaktionssystem T und Geldverwaltungssystem G zur Ausführung der Transaktion nach erfindungsgemäßer Freigabe F. Im Bezahlsystem B ist das Transaktionssystem T zumindest mit einem mobilen Terminal 9 und mit mindestens einem Geldverwaltungssystem G über Datenverbindungen verbunden. Die Datenverbindung zu den Geldverwaltungssystemen G kann geeignet ausgestaltet sein. Zur Ausführung der Transaktion, die durch den Transaktionsserver 6 freigegeben wurde, werden erste und zweite Nutzerdaten N1, N2 sowie eine entsprechende Freigabe F vom Transaktionssystem T an das Geldverwaltungssystem G übermittelt, worauf als Reaktion auf diese Übermittlung das Geldverwaltungssystem G die Transaktion gemäß der ersten und zweiten Nutzerdaten N1, N2 durchführt. Hierbei umfasst die Freigabe auch die Transaktionsdaten, die beispielsweise den zu zahlenden Betrag umfassen. Das Geldverwaltungssystem übermittelt den ersten und zweiten Personen Benachrichtigungen über die ausgeführten Transaktionen, die durch das Transaktionssystem freigegeben wurden. Beispielsweise sind die Informationen, die an die erste Person 1 übermittelt werden, so ausgestaltet, dass die erste Person 1 ein elektronisches Kassenbuch umfassend die Beträge der freigegebenen Transaktionen und deren Buchung im Geldverwaltungssystem G führen kann. Dazu benötigt die erste Person 1 wie für die Registrierung beim Transaktionssystem T einen Internetzugang mit entsprechender Hardware. Vorzugsweise wird das elektronische Kassenbuch über die Webseite 12 des Transaktionssystems T für die erste Person 1 bereitgestellt.

### Liste der Bezugszeichen

- 1: erste Person
- 2: zweite Person
- 31: Applikationsspeicher
- 32: Nutzerdatenbank
- 4: Transaktions-Applikation
- 5: Erzeugungsmittel
- 6: Transaktionsserver
- 7: Transaktionscodierungen
- 7-1: erste Transaktionscodierung
- 7-1a: erster Teil der ersten Transaktionscodierung
- 7-2: zweite Transaktionscodierung
- 7-3: dritte Transaktionscodierung
- 70: Personenidentifikation
- 71: erster Transaktionscode
- 72: zweiter Transaktionscode
- 71-1: erster Transaktionscode der ersten Transaktionscodierung
- 72-1: zweiter Transaktionscode der ersten Transaktionscodierung
- 7A: auf dem mobilen Terminal auswählbare Transaktionscodes
- 7-E: ergänzte Transaktionscodierung
- 81: Datenübertragungsmittel (mobiles Terminal - Transaktionsserver)
- 811: Drahtlose Datenverbindung zwischen mobilem Terminal und Transaktionsserver
- 82: Datenübertragungsmittel (Transaktionssystem - erste Person)
- 821: Datenverbindung zwischen Transaktionsserver und Drucker der ersten Person
- 9: mobiles Terminal
- 91: Anzeigeelement des mobilen Terminals
- 92: Bestätigungsfeld im Anzeigeelement
- 10: Vergleichsmittel (zum Vergleich von 7-E mit 7-1, 7-2, 7-3, ...)
- 11: Freigabebestätigung
- 12: Webseite des Transaktionssystems
- 13: Drucker der ersten Person
- 14: Modul zur Ortung des mobilen Terminals

- A: Ausführen der Transaktions-Applikation
- AD: Ausdrucken der Mehrzahl an Transaktionscodierungen durch die erste Person
- AW1: Auswählen der ersten Person
- AW2: Auswählen des zweiten Transaktionscodes als Ergänzung
- B: Bezahlsystem
- BN: Bereitstellen von Nutzerdaten
- B-U4: Bestätigung des übermittelten ersten Teils der ersten Transaktionscodierung
- D: Darstellen des übermittelten Teils der ersten Transaktionscodierung auf dem Anzeigeelement des mobilen Terminals
- E: Ergänzen / Ergänzung des übermittelten Teils der ersten Transaktionscodierung zu einer vollständigen ersten Transaktionscodierung
- F: Freigabe der Transaktion
- G: Geldverwaltungssystem
- I: Installieren der Transaktions-Applikation auf dem mobilen Terminal
- N1: erste Nutzerdaten
- N2: zweite Nutzerdaten
- O: Ortung der Position des mobilen Terminals
- R: Registrieren der ersten und zweiten Personen beim Transaktionssystem
- S: Speichern und Zuordnen der übermittelten Transaktionscodierungen zu den ersten Nutzerdaten
- T: Transaktionssystem
- U1: Übermitteln der Transaktions-Applikation an das mobile Terminal
- U2: Übermitteln einer Mehrzahl an Transaktionscodierungen an die erste Person
- U3: Übermitteln von Daten zur Auswahl der ersten Person an das mobile Terminal
- U4: Übermitteln eines Teils der ersten Transaktionscodierung an das mobile Terminal
- U5: Übermitteln des augewählten zweiten Transaktionscodes an den Transaktionsserver
- U6: Übermittel der Freigabe der Transaktion an das mobile Terminal
- U7: Übermittel der Verweigerung der Freigabe der Transaktion an das mobile Terminal
- V: Verknüpfen der übermittelten Transaktionscodes und Personenidentifikationen zu einer ergänzten Transaktionscodierung
- VER: Verweigerung der Freigabe der Transaktion
- VG: Vergleichen der ergänzten und gespeicherten ersten Transaktionscodierung

## Patentansprüche

1. Ein elektronisches Verfahren zur Freigabe einer Transaktion im Rahmen eines Geschäfts zumindest zwischen einer ersten und einer zweiten Person (1, 2) über ein mobiles Terminal (9) der zweiten Person (2) mit einem Anzeigeelement (91), das mit einem Transaktionsserver (6) eines Transaktionssystems (T) über eine drahtlose Datenverbindung (811) zu einem Datenaustausch zur Freigabe der Transaktion verbunden ist, umfassend die Schritte
- Installieren (I) einer Transaktions-Applikation (4) auf dem mobilen Terminal (9), wobei vorzugsweise die Transaktions-Applikation (4) durch das Transaktionssystem (6) an das mobile Terminal (9) übermittelt (U1) wird,
- Bereitstellen (BN) zumindest erster Nutzerdaten (N1) der ersten Person (1) und zweiter Nutzerdaten (N2) der zweiten Person (2) im Transaktionssystem (T) zum Zugriff durch den Transaktionsserver (6),
- Übermitteln (U2) einer Mehrzahl an Transaktionscodierungen (7-1, 7-2, 7-3, ...) durch das Transaktionssystem (T) an die erste Person (1), wobei jede Transaktionscodierung (7) eine Personenidentifikation (70) für die erste Person (1), einen ersten Transaktionscode (71), vorzugsweise einen graphischen ersten Transaktionscode (71), und einen zweiten Transaktionscode (72), vorzugsweise einen graphischen zweiten Transaktionscode (72), umfasst, wobei sich jede der übermittelten Transaktionscodierungen (7) eindeutig zumindest durch unterschiedliche erste und/oder zweite Transaktionscodes (71, 72) von den anderen übermittelten Transaktionscodierungen (7) unterscheidet,
- Speichern (S) und Zuordnen der übermittelten Transaktionscodierungen (7) im Transaktionssystem (T) zu den ersten Nutzerdaten (N1) der ersten Person (1),
- Ausführen (A) der Transaktions-Applikation (4) auf dem mobilen Terminal (9) der zweiten Person (2) zum Verbinden des mobilen Terminals (9) mit dem Transaktionsserver (6) und zumindest zur Steuerung der Freigabe der Transaktion zur Abwicklung des Geschäfts mit der ersten Person (1) umfassend die Schritte:
(a) Auswählen (AW1) der ersten Person (1) über das mobile Terminal (9) durch die zweite Person (2), vorzugsweise anhand von Daten, die vom Transaktionsserver (6) an das mobile Terminal (9) übermittelt (U3) werden,
(b) Übermitteln (U4) zumindest eines ersten Teils (7-1a) einer ersten Transaktionscodierung (7-1) vom Transaktionsserver (6) an das mobile Terminal (9) der zweiten Person (2),
(c) Ergänzen (E) des übermittelten (U4) ersten Teils (7-1a) der ersten Transaktionscodierung (7-1) durch die erste Person oder durch die zweite Person mit Hilfe der ersten Person (1) mit dem zweiten Transaktionscode (72) der ersten Transaktionscodierung (7-1) als Ergänzung (72-1),
(d) Übermitteln (U5) des zweiten Transaktionscodes (72) als die Ergänzung (72-1) vom mobilen Terminal an den Transaktionsserver (6),
- Verknüpfen (V) des vom Transaktionsserver (6) übermittelten ersten Teils (7-1a) der ersten Transaktionscodierung (7-1) mit dem zweiten Transaktionscode (72) als die Ergänzung (72-1) zu einer ergänzten Transaktionscodierung (7-E) durch das Transaktionssystem (T) und Vergleichen (VG) der ergänzten Transaktionscodierung (7-E) mit der den Nutzerdaten (N1) der ersten Person (1) zugeordneten gespeicherten ersten Transaktionscodierung (7-1) durch das Transaktionssystem mit Hilfe eines Vergleichsmittels, und
- Freigabe (F) der Transaktion durch den Transaktionsserver (6) nach festgestellter Gleichheit der ergänzten und gespeicherten ersten Transaktionscodierung (7-E, 7-1) für diese Transaktion und Übermitteln (U6) einer Freigabebestätigung (11) an das mobile Terminal (9) oder Verweigerung (VER) der Freigabe bei festgestellter Ungleichheit und Übermitteln (U7) der Verweigerung (VER) an das mobile Terminal (9) durch den Transaktionsserver.

2. Das Verfahren nach Anspruch 1,
**dadurch gekennzeichnet,**
**dass** der erste Teil (7-1a) die Personenidentifikation (70) der ersten Person (1) und den ersten Transaktionscode (71-1) umfasst.

3. Das Verfahren nach Anspruch 2,
**dadurch gekennzeichnet,**
**dass** der übermittelte erste Teil (7-1a) der ersten Transaktionscodierung (7-1) auf dem Anzeigeelement (91) zur Ermöglichung der Kenntnisnahme durch die erste Person (1) und zur Bestätigen des richtigen Erkennens der ersten Person (1) dargestellt (D) wird.

4. Das Verfahren nach Anspruch 2 oder 3,
**dadurch gekennzeichnet,**
**dass** der Schritt des Ergänzens (E) das Auswählen (AW2) eines zweiten Transaktionscodes (72) mit Hilfe der zweiten Person (2) aus einer Mehrzahl unterschiedlicher Transaktionscodes (7A) mit dem mobilen Terminal (9) der zweiten Person (2) als die Ergänzung umfasst, wobei nur einer der auswählbaren Transaktionscodes (7A) dem zweiten Transaktionscode (72-1) der ersten Transaktionscodierung (7-1) entspricht, vorzugsweise löst das Auswählen (AW2) ein automatisches Übermitteln (U5) des ausgewählten zweiten Transaktionscodes (72-1) vom mobilen Terminal (9) an den Transaktionsserver (6) aus.

5. Das Verfahren nach Anspruch 4,
**dadurch gekennzeichnet,**
**dass** die Mehrzahl der unterschiedlichen Transaktionscodes, vorzugsweise graphische Transaktionscode, zum Auswählen (AW2) des zweiten Transaktionscodes (72-1), vorzugsweise ein graphischer zweiter Transaktionscode (72-1), im Anzeigeelement (91) als Anordnung der unterschiedlichen Transaktionscodes (7A) dargestellt wird, vorzugsweise als Anordnung mit zufälliger Positionierung und/oder Reihenfolge der Transaktionscodes (7A).

6. Das Verfahren nach Anspruch 5,
**dadurch gekennzeichnet**
**dass** das Auswählen (AW2) des zweiten Transaktionscodes (72-1) durch eine Betätigung einer der Transaktionscodes (7A) erfolgt, vorzugsweise durch Drücken auf einen der Transaktionscodes (7A) bei einem als Touch-Screen ausgeführten Anzeigeelement (91) oder durch Anklicken eines der Transaktionscodes (7A) mittels eines Cursors im Anzeigeelement (91).

7. Das Verfahren nach einem der Ansprüche 4 bis 6,
**dadurch gekennzeichnet,**
**dass** die Mehrzahl der Transaktionscodes (7A) vom Transaktionsserver (6) an das mobile Terminal (9) als Reaktion auf die Bestätigung des richtigen Erkennens der ersten Person (1) übermittelt wird.

8. Das Verfahren nach einem der voranstehenden Ansprüche, umfassend den weiteren Schritt eines Registrierens (R) zumindest der ersten Person und zweiten Person (1, 2) beim Transaktionssystem (T) zur Erstellung von ersten und zweiten Nutzerdaten (N1, N2), vorzugsweise wird die Registrierung (R) zumindest der ersten Person (1) über eine Webseite (12) des Transaktionssystems (T) unter Angabe von Daten durch zumindest die erste Person (1) durchgeführt.

9. Das Verfahren nach Anspruch 8,
**dadurch gekennzeichnet,**
**dass** ein Erststart der installierten Transaktions-Applikation (4) auf dem mobilen Terminal (9) nach Aufbau einer drahtlose Datenverbindung (811) zum Transaktionsserver (6) den Schritt des Registrierens für die zweite Person (2) automatisch startet, vorzugsweise werden Kontaktdaten zum Aufbau der drahtlosen Datenverbindung (811) durch die Transaktions-Applikation (4) automatisch zum Transaktionsserver (6) übermittelt.

10. Das Verfahren nach Anspruch 8 oder 9,
**dadurch gekennzeichnet,**
**dass** das Transaktionssystem (T) automatisch die Mehrzahl der Transaktionscodierungen (7-1, 7-2, 7-3, ...) für die registrierte erste Person (1) zur Übermittlung (U2) an die erste Person (1) erzeugt, vorzugsweise erfolgt die Übermittlung (U2) der Mehrzahl der Transaktionscodierungen (7-1, 7-2, 7-3, ...) durch das Transaktionssystem (T) an die erste Person (1) mittels Ausdrucken (AD) der Transaktionscodierungen (7) auf einem Drucker (13) der ersten Person (1).

11. Das Verfahren nach einem der voranstehenden Ansprüche,
**dadurch gekennzeichnet,**
**dass** der Schritt des Auswählens (AW1) der ersten Person (1) die folgenden Schritte umfasst: (i) die automatische Positionsortung (O) des mobilen Terminals (9) durch das Transaktionssystem (T), (ii) die Übermittlung (U3) von Daten aller erster Personen (1), die sich in einem Bereich um das mobile Terminal (9) herum befinden, (iii) das Darstellen der Daten im Anzeigeelement (91) des mobilen Terminals (9) in einer zur Auswahl (AW1) der ersten Person (1) geeigneten Form, vorzugsweise in graphischer Form, (iv) Auswählen (AW1) der ersten Person (1) durch Betätigen einer der ersten Person (1) zugeordneten Darstellung im Anzeigeelement (91).

12. Transaktions-Applikation (4) gespeichert auf einem Speichermedium, die geeignet ist, in dem Verfahren nach Anspruch 1 auf dem mobilen Terminal (9) der zweiten Person (2) zum Verbinden des mobilen Terminals (9) mit dem Transaktionsserver (6) und zumindest zur Steuerung der Freigabe der Transaktion zur Abwicklung des Geschäfts mit der ersten Person (1) in Verbindung mit einem Transaktionssystem (T) nach Anspruch 14 ausgeführt (A) zu werden, umfassend dabei die Schritte
(a) Auswählen (AW1) der ersten Person (1) über das mobile Terminal (9) durch die zweite Person (2), vorzugsweise anhand von Daten, die vom Transaktionsserver (6) an das mobile Terminal (9) übermittelt (U3) werden,
(b) Übermitteln (U4) zumindest eines ersten Teils (7-1a) einer ersten Transaktionscodierung (7-1) vom Transaktionsserver (6) an das mobile Terminal (9) der zweiten Person (2),
(c) Ergänzen (E) des übermittelten (U4) ersten Teils (7-1a) der ersten Transaktionscodierung (7-1) durch die erste Person oder durch die zweite Person mit Hilfe der ersten Person (1) mit dem zweiten Transaktionscode (72) der ersten Transaktionscodierung (7-1) als Ergänzung (72-1), und
(d) Übermitteln (U5) des zweiten Transaktionscodes (72) als die Ergänzung (72-1) vom mobilen Terminal an den Transaktionsserver (6),

13. Mobiles Terminal (9) mit einem Anzeigeelement (91), das mit einem Transaktionsserver (6) eines Transaktionssystems (T) nach Anspruch 14 über eine drahtlose Datenverbindung (811) zu einen Datenaustausch verbindbar ist und auf dem eine Transaktions-Applikation (4) nach Anspruch 12 zur Ausführung auf dem mobilen Terminal (9) installiert ist und auf dem mobilen Terminal (9) ausgeführt werden kann.

14. Transaktionssystem (T) zur Freigabe einer Transaktion im Rahmen eines Geschäfts zumindest zwischen einer ersten und einer zweiten Person (1, 2) umfassend einen Applikationsspeicher (31) zum Speichern einer Transaktions-Applikation (4), eine Nutzerdatenbank (32) zur Speicherung zumindest erster Nutzerdaten (N1) der ersten Person (1) und zweiter Nutzerdaten (N2) der zweiten Person (2), ein Erzeugungsmittel (5) zur Erzeugung von Transaktionscodierungen (7), die jeweils eine Personenidentifikation (70) für die erste Person (1), einen ersten Transaktionscode (71), vorzugsweise einen graphischen ersten Transaktionscode (71), und einen zweiten Transaktionscode (72), vorzugsweise einen graphischen zweiten Transaktionscode (72), umfassen, und einen zumindest mit dem Applikationsspeicher (31), der Nutzerdatenbank (32) und dem Erzeugungsmittel (5) über Datenleitungen verbundenen Transaktionsserver (6),
wobei die Transaktions-Applikation (4) dazu ausgestaltet ist, auf einem mobilen Terminal (9) der zweiten Person (2) zum Verbinden des mobilen Terminals (9) mit dem Transaktionsserver (6) und zumindest zur Steuerung der Freigabe der Transaktion zur Abwicklung des Geschäfts mit der ersten Person (1) in Verbindung mit dem Transaktionssystem (T) ausgeführt (A) zu werden, umfassend dabei die Schritte
(a) Auswählen (AW1) der ersten Person (1) über das mobile Terminal (9) durch die zweite Person (2), vorzugsweise anhand von Daten, die vom Transaktionsserver (6) an das mobile Terminal (9) übermittelt (U3) werden,
(b) Übermitteln (U4) zumindest eines ersten Teils (7-1a) einer ersten Transaktionscodierung (7-1) vom Transaktionsserver (6) an das mobile Terminal (9) der zweiten Person (2),
(c) Ergänzen (E) des übermittelten (U4) ersten Teils (7-1a) der ersten Transaktionscodierung (7-1) durch die erste Person oder durch die zweite Person mit Hilfe der ersten Person (1) mit dem zweiten Transaktionscode (72) der ersten Transaktionscodierung (7-1) als Ergänzung (72-1), und
(d) Übermitteln (U5) des zweiten Transaktionscodes (72) als die Ergänzung (72-1) vom mobilen Terminal an den Transaktionsserver (6),
wobei der Transaktionsserver (6) dazu ausgestaltet ist
- zumindest die ersten und zweiten Nutzerdaten (N1, N2) bereitzustellen (BN),
- mit geeigneten Datenübertragungsmitteln (82) einer Mehrzahl an erzeugten Transaktionscodierungen (7-1, 7-2, 7-3,...) an die erste Person (1) zu übermitteln (U2), wobei sich jede der übermittelten (U2) Transaktionscodierungen (7) eindeutig zumindest durch unterschiedliche erste und/oder zweite Transaktionscode (71, 72) von den anderen übermittelten Transaktionscodierungen (7) unterscheidet,
- eine drahtlose Datenverbindung (811) mit dem mobilen Terminal (9) der zweiten Person (2) herzustellen,
- ein Auswählen (AW1) der ersten Person (1) über das mobile Terminal (9) der zweiten Person (2) zu ermöglichen und nach deren Auswahl einen ersten Teil (7-1a) einer ersten Transaktionscodierung (7-1) an das mobile Terminal (9) der zweiten Person (2) zur Ergänzung zu übermitteln (U3, U4),
- den zweiten Transaktionscode (72) als eine vom mobilen Terminal (9) übermittelte (U5) Ergänzung (72-1) zu empfangen und mit einem Vergleichsmittel (10) den vom Transaktionsserver (6) übermittelten ersten Teil (7-1a) der ersten Transaktionscodierung (7-1) mit dem zweiten Transaktionscode (72) als die übermittelte Ergänzung zu einer ergänzten Transaktionscodierung (7-E) zu verknüpfen (V) und die ergänzte Transaktionscodierung (7-E) mit der den Nutzerdaten (N1) der ersten Person (1) zugeordneten gespeicherten ersten Transaktionscodierung (7-1) zu vergleichen (VG), und
- nach festgestellter Gleichheit der ergänzten und gespeicherten ersten Transaktionscodierung (7-E, 7-1) die Freigabe (F) für diese Transaktion zu geben und eine Freigabebestätigung (11) an das mobile Terminal (9) zu übermitteln (U6) oder nach festgestellter Ungleichheit die Freigabe zu verweigern und die Verweigerung (VER) an das mobile Terminal (9) zu übermitteln (U7).

15. Transaktionssystem nach Anspruch 14,
**dadurch gekennzeichnet,**
**dass** der Transaktionsserver dazu ausgestaltet ist, mit geeigneten Datenübertragungsmitteln (81) die Transaktions-Applikation (4) an ein mobiles Terminal (9) der zweiten Person (2) nach Anspruch 12 zu übermitteln (U1),

16. Transaktionssystem nach Anspruch 14 oder 15,
**dadurch gekennzeichnet,**
**dass** das Transaktionssystem eine Webseite (12) zum Registrieren (R) zumindest der ersten Person (1) beim Transaktionssystem (T) und zur Eingabe von Daten durch zumindest die erste Person (1) zur Erstellung von ersten Nutzerdaten (N1) umfasst

17. Transaktionssystem nach einem der Ansprüche 14 bis 16,
**dadurch gekennzeichnet,**
**dass** das Transaktionssystem (T) ein Bezahlsystem (B), das mit dem Transaktionssystem (T) über eine drahtlose Datenverbindung (811) zur Ausführung eines Verfahrens nach Anspruch 1 verbunden ist, und mindestens einem Geldverwaltungssystem (G), das mit dem Transaktionssystem (T) verbunden ist, um die Transaktion nach Freigabe (F) durch das Transaktionssystem (T) zwischen erster und zweiter Person (1, 2) auszuführen, umfasst.

## Claims

1. Electronic method for approval of a transaction within the scope of a business transaction at least between a first and a second person (1, 2) via a mobile terminal (9) of the second person (2) with a display element (91) which is connected to a transaction server (6) of a transaction system (T) via a wireless data connection (811) for exchanging data in order to approve the transaction, comprising the following steps:
- installing (I) a transaction application (4) on the mobile terminal (9), wherein preferably the transaction application (4) is transmitted (U1) to the mobile terminal (9) by means of the transaction system (6),
- providing (BN), in the transaction system (T), at least first user data (N1) of the first person (1) and second user data (N2) of the second person (2) for access by the transaction server (6),
- transmitting (U2) a multitude of transaction encodings (7-1, 7-2, 7-3,...) by the transaction system (T) to the first person (1), wherein each transaction encoding (7) includes a personal identifier (70) for the first person (1), a first transaction code (71), preferably a graphic first transaction code (71), and a second transaction code (72), preferably a graphic second transaction code (72), wherein each of the transmitted transaction encodings (7) differs unambiguously from the transmitted other transaction encodings (7) at least by different first and/or second transaction codes (71, 72),
- storing (S) and allocating the transmitted transaction encodings (7) in the transaction system (T) to the first user data (N1) of the first person (1),
- executing (A) the transaction application (4) on the mobile terminal (9) of the second person (2) for connecting the mobile terminal (9) with the transaction server (6) and at least for the control of the approval of the transaction in order to complete the business transaction with the first person (1), comprising the steps of:
(a) selecting (AW1), by means of the second person, the first person (1) via the mobile terminal (9), preferably using data which is transmitted (U3) from the transaction server (6) to the mobile terminal (9),
(b) transmitting (U4) at least a first part (7-1a) of a first transaction encoding (7-1) from the transaction server (6) to the mobile terminal (9) of the second person (2),
(c) supplementing (E) of the transmitted (U4) first part (7-1a) of the first transaction encoding (7-1), by the first person or by the second person with the help of the first person (1), with the second transaction code (72) as a supplement (72-1),
(d) transmitting (U5) the second transaction code (72) as the supplement (72-1) from the mobile terminal to the transaction server (6),
- Linking (V) of the transmitted first part (7-1a) of the first transaction encoding (7-1) with the second transaction code (72) as the supplement (72-1) to a supplemented transaction encoding (7-E) by the transactions system (T) and comparing (VG) the supplemented transaction encoding (7-E) with the stored first transaction encoding (7-1) assigned to the user data (N1) of the first person (1) by the transaction system with the aid of a comparison means, and
- approval (F) of the transaction by the transaction server (6) after having determined the equality of the completed and stored first transaction encoding (7-E, 7-1) for this transaction and transmitting (U6) an approval confirmation (11) to the mobile terminal (9) or denial (VER) of the approval upon determined inequality and transmitting (U7) the denial (VER) to the mobile terminal (9) by the transaction server.

2. The method according to claim 1,
**characterized in that**
the first part (7-1a) includes the personal identifier (70) of the first person (1) and the first transaction code (71-1).

3. The method according to claim 2,
**characterized in that**
the transmitted first part (7-1a) of the first transaction encoding (7-1) is illustrated (D) on the display element (91) in order to allow the first person (1) to notice it and for confirming the correct recognition of the first person (1).

4. The method according to claim 2 or 3,
**characterized in that**
the step of supplementing (E) includes the selecting (AW2) of a second transaction code (72) with the help of the second person (2) from a multitude of different transaction codes (7A) with the mobile terminal (9) of the second person (2) as the supplement, wherein only one of the selectable transaction codes (7a) corresponds to the second transaction code (72-1) of the first transaction encoding (7-1), preferably, the selecting (AW2) triggers an automated transmission (U5) of the selected second transaction code (72-1) form the mobile terminal (9) to the transaction server (6).

5. The method according to claim 4,
**characterized in that**
the multitude of the different transaction codes, preferably graphic transaction codes, for selecting (AW2) the second transaction code (72-1), preferably a second graphic transaction code (72-1), is illustrated in the display element (91) as an arrangement of the different transaction codes (7A), preferably as an arrangement with arbitrary positioning and/or order of the transaction codes (7A).

6. The method according to claim 5,
**characterized in that**
the selection (AW2) the second transaction code (72-1) is effected by an activation of one of the transaction codes (7A), preferably by pushing on one of the transaction codes (7A) in a display element (91) configured as a touch screen or by clicking on one of the transaction codes (7A) using a cursor in the display element (91).

7. The method according to tone of claims 4 to 6,
**characterized in that**
the multitude of the transaction codes (7A) is transmitted from the transaction server (6) to the mobile terminal (9) in response to the confirmation of the correct recognition of the first person (1).

8. The method according to one of the preceding claims, including the further step of a registration (R) of at least the first person and the second person (1, 2) with the transaction system (T) for establishing first and second user data (N1, N2), preferably, the registration (R) of at least the first person (1) is performed via a website (12) of the transaction system (T) by providing data by at least the first person (1).

9. The method according to claim 8,
**characterized in that**
a first start of the installed transaction application (4) on the mobile terminal (9) after establishment of a wireless data connection (11) to the transaction server (6) automatically starts the step of registering for the second person (2), preferably contact data for establishing the wireless data connection (811) are automatically transmitted to the transaction server (6) by the transaction application (4).

10. The method according to claim 8 or 9,
**characterized in that**
the transaction system (T) automatically generates the multitude of transaction encodings (7-1, 7-2, 7-3,...) for the registered first person (1) for transmission (U2) to the first person (1), preferably, the transmission (U2) of the multitude of transaction encodings (7-1, 7-2, 7-3...) by the transaction system (T) to the first person (1) is effected by means of printing (AD) of the transaction encodings (7) on a printer (13) of the first person (1).

11. The method according to one of the preceding claims,
**characterized in that**
the step of selecting (AW1) the first person (1) includes the following steps: (i) the automatic position localization (O) of the mobile terminal (9) by the transaction system (T), (ii) the transmission (U3) of data of all first persons (1) which are located in the vicinity of the mobile terminal (9), (iii) the illustration of the data in the display element (91) of the mobile terminal (9) in a form suitable for selecting (AW1) the first person (1), preferably in graphic form, (iv) selecting (AW1) the first person (1) by activation of an illustration assigned to the first person (1) in the display element (91).

12. Transaction application (4) which is stored on a storage medium, which application is suitable to be executed in the method according to claim 1 on the mobile terminal (9) of the second person (2) for connecting the mobile terminal (9) to the transaction server (6) and at least for controlling the approval of the transaction for concluding the business transaction with the first person (1) in connecting with a transaction system (T) according to claim 14, comprising the following steps:
(a) selecting (AW1), by the second person, the first person (1) via the mobile terminal (9), preferably using data which is transmitted (U3) from the transaction server (6) to the mobile terminal (9),
(b) transmitting (U4) at least a first part (7-1a) of a first transaction encoding (7-1) from the transaction server (6) to the mobile terminal (9) of the second person (2),
(c) supplementing (E) of the transmitted (U4) first part (7-1a) of the first transaction encoding (7-1), by the first person or by the second person with the help of the first person (1), with the second transaction code (72) as a supplement (72-1), and
(d) transmitting (U5) the second transaction codes (72) as the supplement (72-1) from the mobile terminal to the transaction server (6).

13. Mobile terminal (9) with a display element (91) which is connectable to a transaction server (6) of a transaction system (T) according to claim 14 via a wireless data connection (811) for exchanging data and on which a transaction application (4) according to claim 12 for execution on the mobile terminal (9) is installed and can be executed on the mobile terminal (9).

14. Transaction system (T) for approval of a transaction within the scope of a business transaction at least between a first and a second person (1, 2), including an application storage (31) for storing a transaction application (4), a user database (32) for storing of at least first user data (N1) of the first person (1) and second user data (N2) of the second person (2), a generating means (5) for generating transaction encodings (7) which each include a personal identifier (70) for the first person (1), a first transaction code (71), preferably a graphic first transaction code (71), and a second transaction code (72), preferably a graphic second transaction code (72), and a transaction server (6) which is at least connected to the application storage (31), the user database (32) and the generating means (5) via data lines,
wherein the transaction application (4) is configured to be executed (A) on a mobile terminal (9) of the second person (2) for connecting the mobile terminal (9) of the second person (2) with the transaction server (6) and at least for controlling the approval of the transaction for conducting the business transaction with the first person (1) in connection with the transaction system (T), thereby comprising the steps:
(a) selecting (AW1), by the second person, the first person (1) via the mobile terminal (9), preferably using data which is transmitted (U3) from the transaction server (6) to the mobile terminal (9),
(b) transmitting (U4) at least a first part (7-1a) of a first transaction encoding (7-1) from the transaction server (6) to the mobile terminal (9) of the second person (2),
(c) Supplementing (E) of the transmitted (U4) first part (7-1a) of the first transaction encoding (7-1), by the first person or by the second person with the help of the first person (1), with the second transaction code (72) as a supplement (72-1),
(d) transmitting (U5) the second transaction code (72) as the supplement (72-1) from the mobile terminal to the transaction server (6),
wherein the transaction server (6) is configured to
- provide (BN) at least the first and second user data (N1, N2),
- transmit (U2), with suitable data transmission means (82), a multitude of generated transaction encodings (7-1, 7-2, 7-3...) to the first person (1), wherein each of the transmitted (U2) transaction encodings (7) differs unambiguously from the transmitted other transaction encodings (7) at least by different first and/or second transaction codes (71, 72),
- establish a wireless data connection (811) with the mobile terminal (9) of the second person (2),
- allow selecting (AW1) the first person (1) from the mobile terminal (9) of the second person (9) and, after their selection, transmit a first part (7-1a) of a first transaction encoding (7-1) to the mobile terminal (9) of the second person (2) for supplement (U3, U4),
- receive the second transaction code (72) as a supplement (72-1) transmitted from the mobile terminal (9) and to link (V) the first part (7-1a) of the first transaction encoding (7-E) transmitted from the transaction server (6) as the transmitted supplement to a supplemented transaction encoding (7-E) and to compare (VG) the supplemented transaction encoding (7-E) with the first transaction encoding (7-1) assigned to the user data (N1) of the first person (1), and
- after determined equality of the supplemented and stored first transaction encoding (7-E, /-1), to give the approval (F) for this transaction and to transmit (U6) an approval confirmation (11) to the mobile terminal (9) or, after determined inequality, to refuse the approval and to transmit (U7) the refusal (VER) to the mobile terminal (9).

15. Transaction system according to claim 14,
**characterized in that**
the transaction server is configured to transmit (12) the transaction application (4) to a mobile terminal (9) of the second person (2) according to claim 12 with suitable data transmission means (81).

16. Transaction system according to claim 14 or 15,
**characterized in that**
the transaction system includes a website for the registration of at least the first person (1) at the transaction system (T) and for the input of data by at least the first person (1) for compiling first user data (N1).

17. Transaction system according to one of claims 14 to 16,
**characterized in that**
the transaction system (T) includes a payment system (B) connected to the transaction system (T) via a wireless data connection (811) for executing a method according to claim 1, and at least one money management system (G) connected to the transaction system (T) in order to execute the transaction after approval (F) by the transaction system (T) between the first and the second person (1, 2).

## Revendications

1. Procédé électronique destiné à autoriser une transaction dans le cadre d'une transaction au moins entre une première et une deuxième personnes (1, 2) par l'intermédiaire d'un terminal mobile (9) de la deuxième personne (2) à l'aide d'un élément d'affichage (91) qui est relié à un serveur de transaction (6) d'un système de transaction (T) par l'intermédiaire d'une liaison de données (811) sans fil pour un échange de données dans le but d'autoriser la transaction, comprenant les étapes
- installation (I) d'une application de transaction (4) sur le terminal mobile (9), l'application de transaction (4), de préférence, étant transmise (U1) au terminal mobile (9) par le système de transaction (6)
- mise à disposition (BN), dans le système de transaction (T), d'au moins de premières données utilisateur (N1) de la première personne (1) et de deuxièmes données utilisateur (N2) de la deuxième personne (2) pour l'accès par le serveur de transaction (6),
- transmission (U2), par le système de transaction (T), d'une pluralité de codages de transaction (7-1, 7-2, 7-3, ...) à la première personne (1), chaque codage de transaction (7) comprenant une identification de personne (70) pour la première personne (1), un premier code de transaction (71), de préférence un premier code de transaction (71) graphique, et un deuxième code de transaction (72), de préférence un deuxième code de transaction (72) graphique, chacun des codages de transaction (7) transmis se distinguant de manière distincte des autres codages de transaction (7) transmis au moins par différents premiers et/ou différents deuxièmes codes de transaction (71, 72),
- mémorisation (S) et attribution des codages de transaction (7) transmis, dans le système de transaction (T), aux premières données utilisateur (N1) de la première personne (1),
- exécution (A) de l'application de transaction (4) sur le terminal mobile (9) de la deuxième personne (2) pour la connexion du terminal mobile (9) au serveur de transaction (6) et au moins pour la commande de l'autorisation de la transaction dans le but de réaliser la transaction avec la première personne (1), comprenant les étapes :
(a) sélection (AW1) de la première personne (1) par la deuxième personne (2) par l'intermédiaire du terminal mobile (9), de préférence à l'aide de données qui sont transmises (U3) au terminal mobile (9) par le serveur de transaction (6),
(b) transmission (U4), par le serveur de transaction (6), d'au moins une première partie (7-1a) d'un premier codage de transaction (7-1), au terminal mobile (9) de la deuxième personne (2),
(c) complément (E), par la première personne ou par la deuxième personne à l'aide de la première personne (1), de la première partie (7-1a) transmise (U4) du premier codage de transaction (7-1), avec le deuxième code de transaction (72) du premier codage de transaction (7-1) en tant que complément (72-1)
(d) transmission (U5) au serveur de transaction (6), par le terminal mobile, du deuxième code de transaction (72) en tant que complément (72-1),
- liaison (V), au deuxième code de transaction (72), de la première partie (7-1a) du premier codage de transaction (7-1), transmise par le serveur de transaction (6), en tant que complément (72-1) à un codage de transaction complété (7-E), par le système de transaction (T), et comparaison (VG), par le système de transaction à l'aide d'un moyen de comparaison, du codage de transaction complété (7-E) avec le premier codage de transaction (7-1) mémorisé, attribué aux données utilisateur (N1) de la première personne (1), et
- autorisation (F) de la transaction par le serveur de transaction (6) après la constatation de similitude du codage de transaction complété et du premier codage de transaction mémorisé (7-E, 7-1) pour cette transaction, et transmission (U6) au terminal mobile (9) d'une confirmation d'autorisation (11) ou d'un refus (VER) de l'autorisation en cas de constatation de non-similitude, et transmission (U7) du refus (VER) au terminal mobile (9) par le serveur de transaction.

2. Procédé selon la revendication 1,
**caractérisé en ce**
**que** la première partie (7-1a) comprend l'identification de personne (70) de la première personne (1) et le premier code de transaction (71-1).

3. Procédé selon la revendication 2,
**caractérisé en ce**
**que** la première partie (7-1a) transmise du premier codage de transaction (7-1) est représentée (D) sur l'élément d'affichage (91) afin de permettre la prise de connaissance par la première personne (1) et de confirmer l'identification correcte de la première personne (1).

4. Procédé selon la revendication 2 ou 3,
**caractérisé en ce**
**que** l'étape du complément (E) comprend la sélection (AW2) d'un deuxième code de transaction (72) à l'aide de la deuxième personne (2) à partir d'une pluralité de codes de transaction (7A) différents, avec le terminal mobile (9) de la deuxième personne (2), en tant que complément, seulement un des codes de transaction (7A) sélectionnables correspondant au deuxième code de transaction (72-1) du premier codage de transaction (7-1), la sélection (AW2) déclenchant de préférence une transmission automatique (U5), au serveur de transaction (6), du deuxième code de transaction (72-1) sélectionné, par le terminal mobile (9).

5. Procédé selon la revendication 4,
**caractérisé en ce**
**que** la pluralité de codes de transaction différents, de préférence de codes de transaction graphiques, est représentée pour la sélection (AW2) du deuxième code de transaction (72-1), de préférence un deuxième code de transaction (72-1) graphique, sur l'élément d'affichage (91) en tant qu'agencement des différents codes de transaction (7A), de préférence en tant qu'agencement avec positionnement aléatoire et/ou par ordre des codes de transaction (7A).

6. Procédé selon la revendication 5,
**caractérisé en ce**
**que** la sélection (AW2) du deuxième code de transaction (72-1) est réalisée au moyen d'une commande de l'un des codes de transaction (7A), de préférence en appuyant sur l'un des codes de transaction (7A) en cas d'un élément d'affichage (91) réalisé comme écran tactile ou en cliquant sur l'un des codes de transaction (7A) au moyen d'un curseur présent sur l'élément d'affichage (91).

7. Procédé selon l'une quelconque des revendications 4 à 6,
**caractérisé en ce**
**que** la pluralité des codes de transaction (7A) est transmise au terminal mobile (9) par le serveur de transaction (6) en tant que réaction à la confirmation de l'identification correcte de la première personne (1).

8. Procédé selon l'une quelconque des revendications précédentes, comprenant l'étape supplémentaire d'un enregistrement (R) d'au moins la première personne et la deuxième personne (1, 2) dans le système de transmission (T) dans le but d'établir des premières et des deuxièmes données utilisateur (N1, N2), l'enregistrement (R) d'au moins la première personne (1) étant réalisé de préférence par l'intermédiaire d'un site internet (12) du système de transaction (T) avec indication de données par au moins la première personne (1).

9. Procédé selon la revendication 8,
**caractérisé en ce**
**qu'**un démarrage initial, sur le terminal mobile (9), de l'application de transaction (4) installée, après l'établissement d'une liaison de données (811) sans fil vers le serveur de transaction (6), démarre automatiquement l'étape de l'enregistrement pour la deuxième personne (2), des données de contact pour l'établissement de la liaison de données (11) sans fil étant de préférence transmises automatiquement vers le serveur de transaction (6) par l'application de transaction (4).

10. Procédé selon la revendication 8 ou 9,
**caractérisé en ce**
**que** le système de transaction (T) génère automatiquement la pluralité de codages de transaction (7-1, 7-2, 7-3, ...) pour la première personne (1) enregistrée, pour la transmission (U2) à la première personne (1), la transmission (U2) à la première personne (1) de la pluralité de codages de transaction (7-1, 7-2, 7-3, ...) étant réalisée de préférence par le système de transaction (T) par impression (AD) des codages de transaction (7) sur une imprimante (13) de la première personne (1).

11. Procédé selon l'une quelconque des revendications précédentes,
**caractérisé en ce**
**que** l'étape de la sélection (AW1) de la première personne (1) comprend les étapes suivantes : (i) la localisation (O) automatique du terminal mobile (9) par le système de transaction (T), (ii) la transmission (U3) de données de toutes les premières personnes (1) qui se trouvent dans une zone située à proximité du terminal mobile (9), (iii) la représentation des données sur l'élément d'affichage (91) du terminal mobile (9) sous une forme appropriée à la sélection (AW1) de la première personne (1), de préférence sous forme graphique, (iv) sélection de la première personne (1) par commande d'une représentation sur l'élément d'affichage (91), attribuée à la première personne (1).

12. Application de transaction (4) mémorisée sur un support de mémoire, laquelle est apte à être exécutée (A) dans le procédé selon la revendication 1 sur le terminal mobile (9) de la deuxième personne (2) pour la connexion du terminal mobile (9) au serveur de transaction (6) et au moins pour la commande de l'autorisation de la transaction dans le but de réaliser la transaction avec la première personne (1), en liaison avec un système de transaction (T) selon la revendication 14, comprenant les étapes :
(a) sélection (AW1) de la première personne (1) par la deuxième personne (2) par l'intermédiaire du terminal mobile (9), de préférence à l'aide de données qui sont transmises (U3) au terminal mobile (9) par le serveur de transaction (6),
(b) transmission (U4), par le serveur de transaction (6), d'au moins une première partie (7-1a) d'un premier codage de transaction (7-1) au terminal mobile (9) de la deuxième personne (2),
(c) complément (E), par la première personne ou par la deuxième personne à l'aide de la première personne (1), de la première partie (7-1a) transmise (U4) du premier codage de transaction (7-1), avec le deuxième code de transaction (72) du premier codage de transaction (7-1) en tant que complément (72-1), et
(d) transmission (U5) au serveur de transaction (6), par le terminal mobile, du deuxième code de transaction (72) en tant que complément (72-1).

13. Terminal mobile (9) comprenant un élément d'affichage (91), lequel peut être relié à un serveur de transaction (6) d'un système de transaction (T) selon la revendication 14 par l'intermédiaire d'une liaison de données (11) sans fil pour un échange de données, et sur lequel une application de transaction (4) selon la revendication 12 est installée pour l'exécution sur le terminal mobile (9) et peut être exécutée sur le terminal mobile (9).

14. Système de transaction (T) destiné à autoriser une transaction dans le cadre d'une transaction au moins entre une première et une deuxième personnes (1, 2), comprenant une mémoire d'application (31) destinée à mémoriser une application de transaction (4), une banque de données utilisateur (32) destinée à mémoriser au moins des premières données utilisateur (N1) de la première personne (1) et des deuxièmes données utilisateur (N2) de la deuxième personne (2), un moyen générateur (5) destiné à générer des codages de transaction (7) qui comprennent respectivement une identification de personne (70) pour la première personne (1), un premier code de transaction (71), de préférence un premier code de transaction (71) graphique, et un deuxième code de transaction (72), de préférence un deuxième code de transaction (72) graphique, et comprenant un serveur de transaction (6) relié au moins à la mémoire d'application (31), à la banque de données utilisateur (32) et au moyen générateur (5) par l'intermédiaire de lignes de données,
l'application de transaction (4) étant configurée pour être exécutée sur un terminal mobile (9) de la deuxième personne (2) pour la connexion du terminal mobile (9) au serveur de transaction (6) et pour au moins la commande de l'autorisation de la transaction pour la réalisation de la transaction avec la première personne (1), en liaison avec le système de transaction (T), comprenant à cet effet les étapes
(a) sélection (AW1) de la première personne (1) par la deuxième personne (2) par l'intermédiaire du terminal mobile (9), de préférence à l'aide de données qui sont transmises (U3) au terminal mobile (9) par le serveur de transaction (6),
(b) transmission (U4), par le serveur de transaction (6), d'au moins une première partie (7-1a) d'un premier codage de transaction (7-1) au terminal mobile (9) de la deuxième personne (2),
(c) complément (E), par la première personne ou par la deuxième personne à l'aide de la première personne (1), de la première partie (7-1a) transmise (U4) du premier codage de transaction (7-1), avec le deuxième code de transaction (72) du premier codage de transaction (7-1) en tant que complément (72-1), et
(d) transmission (U5) au serveur de transaction (6), par le terminal mobile, du deuxième code de transaction (72) en tant que complément (72-1),
le serveur de transaction (6) étant configuré
- pour mettre à disposition (BN) au moins les premières et les deuxièmes données utilisateur (N1, N2),
- pour transmettre (U2) à la première personne (1), à l'aide de moyen de transmission de données (82) appropriés, une pluralité de codages de transaction (7-1, 7-2, 7-3, ...) générés, chacun des codages de transaction (7) transmis (U2) se distinguant de manière distincte des autres codages de transaction (7) transmis au moins par différents premiers et/ou différents deuxièmes codes de transaction (71, 72),
- pour établir une liaison de données (11) sans fil avec le terminal mobile (9) de la deuxième personne (2),
- pour permettre une sélection (AW1) de la première personne (1) par l'intermédiaire du terminal mobile (9) de la deuxième personne (2), et après la sélection de celle-ci, pour transmettre (U3, U4) au terminal mobile (9) de la deuxième personne (2) une première partie (7-1a) d'un premier codage de transaction (7-1) en tant que complément,
- pour recevoir le deuxième code de transaction (72) en tant qu'un complément (72-1) transmis par le terminal mobile (9) et pour relier (V), à l'aide d'un moyen de comparaison (10), la première partie (7-1a) du premier codage de transaction (7-1), transmise par le serveur de transaction (6), au deuxième code de transaction (72) en tant que complément à un codage de transaction (7-E) complété et pour comparer (VG) le codage de transaction (7-E) complété au premier codage de transaction (7-1) mémorisé, attribué aux données utilisateur (N1) de la première personne (1), et
- pour donner, après la constatation de similitude du codage de transaction complété et du premier codage de transaction mémorisé (7-E, 7-1), l'autorisation (F) pour cette transaction et pour transmettre (U6) une confirmation d'autorisation au terminal mobile (9) ou, après la constatation de non-similitude, pour refuser la libération et pour transmettre (U7) le refus (VER) au terminal mobile (9).

15. Système de transaction selon la revendication 14,
**caractérisé en ce**
**que** le serveur de transaction est configuré pour transmettre (U1), à l'aide de moyens de transmission de données (81) appropriés, l'application de transaction (4) à un terminal mobile (9) de la deuxième personne (2), selon la revendication 12.

16. Système de transaction selon la revendication 14 ou 15,
**caractérisé en ce**
**que** le système de transaction comprend un site internet (12) destiné à l'enregistrement (R) d'au moins la première personne (1) dans le système de transaction (T) et à l'entrée de données par au moins la première personne (1) pour l'établissement de premières données utilisateur (N1).

17. Système de transaction selon l'une quelconque des revendications 14 à 16,
**caractérisé en ce**
**que** le système de transaction (T) comprend un système de paiement (B), qui est relié au système de transaction (T) par l'intermédiaire d'une liaison de données (811) sans fil pour la réalisation d'un procédé selon la revendication 1, et au moins un système de gestion d'argent (G) qui est relié au système de transaction (T) afin d'exécuter la transaction entre la première et la deuxième personnes (1, 2) après l'autorisation (F) par le système de transaction (T).
